# EUROPÄISCHE PATENTSCHRIFT

(11) **EP 3 935 950 B1**
(45) Veröffentlichungstag und Bekanntmachung des Hinweises auf die Patenterteilung: **25.06.2025**
(21) Anmeldenummer: 20185158.1
(22) Anmeldetag: 10.07.2020
(51) Int. Cl.: A21C 15/00, A21C 15/02

(54) **VERFAHREN UND ANLAGE ZUR BILDUNG EINES MEHRLAGIGEN WAFFELZWISCHENPRODUKTES**
METHOD AND ASSEMBLY FOR FORMING A MULTILAYERED WAFFLE INTERMEDIATE PRODUCT
PROCÉDÉ ET INSTALLATION DE FORMATION D'UN PRODUIT DE GAUFRES INTERMÉDIAIRE À PLUSIEURS COUCHES

(43) Veröffentlichungstag der Anmeldung: 12.01.2022
(73) Patentinhaber: Bühler Food Equipment GmbH, 2100 Leobendorf (AT)
(72) Erfinder: Semmelmeyer, Christoph, 2020 Hollabrunn (AT); Theimer, Rene, 2112 Lerchenau (AT); Dolkowski, Michael, 2500 Baden (AT); Fellner, Marco, 3180 Lilienfeld (AT)
(74) Vertreter: Puchberger & Partner Patentanwälte

(56) Entgegenhaltungen:
- WO-A1-2015/165877
- GB-A- 1 420 937
- GB-A- 785 435
- US-A- 4 518 617
- US-A1- 2014 295 043

## Beschreibung

Die Erfindung betrifft ein Verfahren und eine Anlage gemäß den Merkmalen der unabhängigen Patentansprüche.

Anlagen und insbesondere auch Verfahren zum Bilden mehrlagiger Waffelzwischenprodukte sind in unterschiedlichen Ausführungsformen bekannt und publiziert. Gattungsgemäße Vorrichtungen sind meist Teil einer Produktionsanlage zur Herstellung von mehrlagigen Waffelprodukten wie beispielsweise Waffelschnitten oder Neapolitaner-Waffeln. Diese Waffelprodukte umfassen mehrere Schichten aus Waffeln, insbesondere aus Flachwaffeln, wobei zwischen den Schichten jeweils eine essbare Füllung wie beispielsweise eine Haselnuss-Kakao-Creme, eine Schokoladecreme oder andere Cremen wie beispielsweise fetthaltige Cremen vorgesehen ist. Gegebenenfalls sind die Produkte mit einem Überzug aus Schokolade versehen.

Herkömmliche Anlagen sind unter anderem aus der US 2014/295043 A1 und der GB 785,435 A bekannt.

Zur Herstellung derartiger Produkte werden in einem ersten Schritt in der Regel Flachwaffeln in einer gattungsgemäßen Backvorrichtung hergestellt. Derartige Backvorrichtungen können auch in Kombination mit der vorliegenden Erfindung eingesetzt werden und sind beispielsweise als sogenannte Backzangenautomaten ausgebildet. Bei diesen speziellen Backvorrichtungen sind entlang eines Endlosförderers auf- und zuklappbare Backzangen vorgesehen, die insbesondere in ihrer zugeklappten Stellung jeweils eine Backform bilden. Die Backzangen werden entlang des Endlosförderers meist kontinuierlich durch den Backofen gefördert. Dabei wird auf eine aufgeklappte Backzange eine Backmasse aufgetragen. In weiterer Folge wird die Backzange zugeklappt, verriegelt und gemäß Stand der Technik durch einen heißen Backraum befördert. Die Backmasse wird in der geschlossenen Backzange durch den Backraum gefördert und dort zu einer Waffel ausgebacken. Anschließend wird die Backzange geöffnet, sodass das Backprodukt entnommen werden kann. In weiterer Folge beginnt der Zyklus von neuem.

Die knusprig spröde Konsistenz der Waffel resultiert aus dem Effekt, dass Backmassen oder Teige mit hohem Wasseranteil von etwa 50-70% unter hohem Druck ausgebacken werden. Dabei entweicht das Wasser der Backmasse in Form von Wasserdampf sehr rasch und hinterlässt dabei eine poröse, spröde Struktur. Um den Backprozess unter hohem Druck durchführen zu können, sind Verriegelungsvorrichtungen vorgesehen. Über diese können die Backzangen verriegelt werden, sodass sich im Inneren ein Überdruck aufbauen kann. Nur durch diesen Überdruck kann der gewünschte Backverlauf erzielt werden. Die Verriegelungsvorrichtungen sind bevorzugt an den Backzangen vorgesehen und im oder nach dem Schließbereich betätigt.

Um nun Waffelblöcke oder Waffelschnitten herzustellen, werden die Waffelblätter mit einer Füllungsschicht versehen. Zur Stapelung der einzelnen Schichten wird in einem ersten Schritt meist ein sogenanntes Waffelsandwich gebildet. Ein Waffelsandwich besteht aus zwei Waffelschichten, zwischen denen eine Füllungsschicht vorgesehen ist. An dieses Waffelsandwich werden in weiterer Folge deckungsgleich mit einer Füllungsschicht versehene Waffelblätter angedrückt, um weitere Lagen hinzuzufügen und um ein mehrlagiges Backzwischenprodukt zu bilden. In der Regel weisen die zu bildenden Produkte drei bis fünf Waffelschichten auf. Die aus der Waffelbackmaschine kommenden Waffelblätter weisen meist eine Größe von etwa 40x80 cm auf. Ist der Waffelblock, also das Backzwischenprodukt gebildet, so kann dieses in weiterer Folge in einzelne Schnitten zerteilt und anschließend verpackt werden.

Nun besteht am Markt eine Nachfrage nach Anlagen und Verfahren zur Bildung derartiger Waffelzwischenprodukte, bei denen der Durchsatz, also die Anzahl der pro Zeit gefertigten Waffelzwischenprodukte, so hoch wie möglich ist. Gleichzeitig besteht am Markt jedoch auch ein erheblicher Preisdruck, der es notwendig macht, derartige Anlagen so kostengünstig wie möglich anzubieten. Aufwendige Steuerungs- und Regelungskonzepte für kontinuierliche Herstellungsverfahren benötigen verhältnismäßig teure Komponenten, die zwar eine Erhöhung des Durchsatzes ermöglichen, die jedoch die Gesamtkosten der Anlage erhöhen.

Aufgabe der vorliegenden Erfindung ist es nun, ein Verfahren und eine Anlage zu schaffen, die einen erhöhten Durchsatz unter Verwendung günstiger, einfach aufgebauter aber dennoch zuverlässiger Komponenten erlaubt.

Die erfindungsgemäße Aufgabe wird insbesondere durch die Merkmale der unabhängigen Patentansprüche gelöst.

Die erfindungsgemäße Anlage umfasst insbesondere eine neue Art eines Sandwichformers, der zur Bildung eines Waffelsandwichs eingerichtet ist, und der mit verhältnismäßig einfachen Mitteln eine Erhöhung des Durchsatzes ermöglicht.

Gegebenenfalls umfasst die Anlage eine neuartige Pressstation, die mit verhältnismäßig einfachen Mitteln eine Erhöhung des Durchsatzes ermöglicht.

Gegebenenfalls umfasst die Anlage mehrere Fördervorrichtungen, die mit verhältnismäßig einfachen Mitteln eine Erhöhung des Durchsatzes ermöglichen.

Auch spezielle Verfahren zur Bildung eines Waffelsandwichs, zur Stapelung in einer Pressstation und/oder zur Förderung der Einzelteile des Waffelzwischenproduktes können zur Erhöhung des Durchsatzes durch verhältnismäßig einfache Mittel beitragen.

Jede einzelne dieser Maßnahmen kann eine Verbesserung bewirken. Jedoch können die einzelnen Komponenten auch unabhängig voneinander die erfindungsgemäße Aufgabe lösen. Insbesondere ist es eine Vorgabe der Erfindung, mehr als 40, bevorzugt mehr als 50 Pressvorgänge der Pressstation pro Minute durchführen zu können. Dies wird insbesondere durch die Kombination aller Maßnahmen erreicht. Grundsätzlich könnten einzelne Maßnahmen jedoch auch durch bekannte, herkömmliche Maßnahmen ersetzt werden.

Die Erfindung betrifft insbesondere ein Verfahren zum Bilden eines mehrlagigen Waffelzwischenprodukts, umfassend folgende Schritte:
Zuführen eines mit einer essbaren Füllungsschicht versehenen ersten Waffelgrundblattes auf einer ersten Förderfläche in einen Sandwichformer sowie Positionieren und Anhalten des ersten Waffelgrundblattes in einem Sandwichformbereich,
Zuführen eines Waffeldeckblattes auf einer zweiten Förderfläche in den Sandwichformer sowie Positionieren und Anhalten des Waffeldeckblattes oberhalb des Sandwichformbereichs,
anschließend in Kontakt bringen der, in Abtransportrichtung gesehen, vorderen Kante des Waffeldeckblattes mit der vorderen Kante des ersten Waffelgrundblattes, insbesondere durch Absenken der vorderen Kante des Waffeldeckblattes auf die vordere Kante des ersten Waffelgrundblattes,
anschließend Abtransport des ersten Waffelgrundblattes in Abtransportrichtung, wobei das Richtung erstes Waffelgrundblatt geneigte Waffeldeckblatt während des Abtransports des ersten Waffelgrundblattes in einem Auflegevorgang deckungsgleich flächig auf das erste Waffelgrundblatt bzw. auf dessen Füllungsschicht gelegt wird.

Gegebenenfalls ist vorgesehen, dass das Waffeldeckblatt während des Auflegevorgangs Richtung erstes Waffelgrundblatt gedrückt wird, wobei das Waffeldeckblatt während des Auflegevorgangs insbesondere durch einen gezielten Gasstrahl Richtung erstes Waffelgrundblatt gedrückt wird

Gegebenenfalls ist vorgesehen, dass das Waffeldeckblatt beim Positionieren und Anhalten entlang der zweiten Förderfläche bewegt wird, bis es an einem Stopper ansteht und bevorzugt im Bereich seiner vorderen Kante auf einem vorderen Auflager und im Bereich seiner hinteren Kante auf einem hinteren Auflager aufgelagert ist.

Gegebenenfalls ist vorgesehen, dass das Waffeldeckblatt durch den Abtransport des ersten Waffelgrundblattes von dem hinteren Auflager heruntergezogen und in dem Auflegevorgang deckungsgleich flächig auf das Waffelgrundblatt bzw. auf dessen Füllungsschicht gelegt wird.

Gegebenenfalls ist vorgesehen, dass das erste Waffelgrundblatt an der Sandwichformposition durch einen Sandwich-Bandförderer mit einem Positionierantrieb stopperlos positioniert und angehalten wird.

Gegebenenfalls ist vorgesehen, dass mehrere Waffelgrundblätter auf der ersten Förderfläche vor dem Sandwichformer in einer Füllungsauftragsvorrichtung mit einer Füllungsschicht versehen werden.

Gegebenenfalls ist vorgesehen, dass die Waffelgrundblätter Stoß an Stoß durch die Füllungsauftragsvorrichtung befördert werden und dadurch als im Wesentlichen durchgehende Fläche mit einer Füllungsschicht versehen werden.

Gegebenenfalls ist vorgesehen, dass ein im Sandwichformer gebildetes Waffelsandwich und mindestens ein mit einer Füllungsschicht versehenes zweites Waffelgrundblatt auf der ersten Förderfläche zu einer dem Sandwichformer nachgeordneten Pressstation befördert werden, in der das Waffelsandwich:
in einem Pressbereich, insbesondere durch einen Press-Bandförderer mit einem Positionierantrieb stopperlos, positioniert und angehalten wird,
anschließend von oder an einer Pressplatte angehoben wird, bis das mit der Füllungsschicht versehene zweite Waffelgrundblatt unterhalb des angehobenen Waffelsandwichs im Pressbereich positioniert und angehalten ist,
und anschließend durch die Pressplatte in einem Pressvorgang deckungsgleich flächig auf das zweite Waffelgrundblatt bzw. dessen Füllungsschicht aufgepresst wird.

Gegebenenfalls ist vorgesehen, dass das Waffelsandwich und das durch den Pressvorgang an dem Waffelsandwich anhaftende mit der Füllungsschicht versehene zweite Waffelgrundblatt zusammen einen Waffelzwischenproduktbestandteil bilden.

Gegebenenfalls ist vorgesehen, dass der Waffelzwischenproduktbestandteil:
von oder an der Pressplatte angehoben wird, bis ein mit einer Füllungsschicht versehenes drittes Waffelgrundblatt unterhalb des angehobenen Waffelzwischenproduktbestandteils im Pressbereich positioniert und angehalten ist,
und anschließend durch die Pressplatte in einem Pressvorgang deckungsgleich flächig auf das dritte Waffelgrundblatt bzw. dessen Füllungsschicht aufgepresst wird.

Gegebenenfalls ist vorgesehen, dass das Waffelsandwich und die durch den Pressvorgang an dem Waffelsandwich anhaftenden Waffelgrundblätter zusammen einen Waffelzwischenproduktbestandteil bilden, und dass der Waffelzwischenproduktbestandteil:
von oder an der Pressplatte angehoben wird, bis ein mit einer Füllungsschicht versehenes viertes Waffelgrundblatt unterhalb des angehobenen Waffelzwischenproduktbestandteils im Pressbereich positioniert und angehalten ist,
und anschließend durch die Pressplatte in einem Pressvorgang deckungsgleich flächig auf das vierte Waffelgrundblatt bzw. dessen Füllungsschicht aufgepresst wird.

Gegebenenfalls ist vorgesehen, dass die Waffelgrundblätter auf der ersten Förderfläche von mehreren entlang der ersten Förderfläche angeordneten Fördervorrichtungen befördert werden, wobei die Fördergeschwindigkeiten der einzelnen Fördervorrichtungen derart eingestellt werden oder sind, dass im Bereich unmittelbar vor dem Sandwichformer:
der erste Abstand, also der Abstand zwischen dem erstem Waffelgrundblatt und dem zweitem Waffelgrundblatt, größer ist als
der zweite Abstand, also der Abstand zwischen zweiten Waffelgrundblatt und dem dritten Waffelgrundblatt.

Gegebenenfalls ist vorgesehen, dass die Fördergeschwindigkeiten der einzelnen Fördervorrichtungen derart eingestellt werden oder sind, dass im Bereich unmittelbar vor der Pressstation:
der dritte Abstand, also der Abstand zwischen dem Waffelsandwich und dem zweiten Waffelgrundblatt im Wesentlichen gleich groß ist wie
der vierte Abstand, also der Abstand zwischen dem zweiten Waffelgrundblatt und dem dritten Waffelgrundblatt.

Insbesondere betrifft die Erfindung eine Anlage zur Bildung eines mehrlagigen Waffelzwischenprodukts, mit einem Sandwichformer zur Bildung eines Waffelsandwichs durch deckungsgleiches Abdecken eines, mit einer essbaren Füllungsschicht versehen, ersten Waffelgrundblattes mit einem Waffeldeckblatt, wobei der Sandwichformer folgende Komponenten umfasst:
einen Abschnitt einer ersten Förderfläche zum Zuführen, Positionieren und Anhalten eines mit einer essbaren Füllungsschicht versehenen ersten Waffelgrundblattes in einem Sandwichformbereich,
einen Abschnitt einer zweiten Förderfläche zum Zuführen eines Waffeldeckblattes oberhalb des Sandwichformbereichs,
einen Stopper, ein vorderes Auflager und ein hinteres Auflager zum Anhalten und Positionieren des Waffeldeckblattes oberhalb des Sandwichformbereichs.

Insbesondere ist die erfindungsgemäße Anlage zur Ausführung des erfindungsgemäßen Verfahrens geeignet und/oder eingerichtet. Insbesondere wir das erfindungsgemäße Verfahren auf der erfindungsgemäßen Anlage ausgeführt.

Gegebenenfalls ist vorgesehen, dass das hintere Auflager zur Auflagerung des Waffeldeckblattes im Bereich seiner hinteren Kante eingerichtet ist.

Gegebenenfalls ist vorgesehen, dass das vordere Auflager zur Auflagerung des Waffeldeckblattes im Bereich seiner vorderen Kante eingerichtet ist.

Gegebenenfalls ist vorgesehen, dass eine Auflagerbewegungsvorrichtung vorgesehen ist, die zur Bewegung des vorderen Auflagers und zum in Kontakt bringen der vorderen Kante des Waffeldeckblattes mit der vordere Kante des ersten Waffelgrundblattes eingerichtet ist.

Gegebenenfalls betrifft die Erfindung eine Anlage mit einer Pressstation zur Bildung eines Waffelzwischenproduktbestandteils durch deckungsgleiches, flächiges Aufpressen des Waffelsandwichs auf ein, mit einer essbaren Füllungsschicht versehenes, zweites Waffelgrundblatt.

Gegebenenfalls ist vorgesehen, dass eine Pressplatte und eine Pressplattenbewegungsvorrichtung vorgesehen sind.

Gegebenenfalls ist vorgesehen, dass die Pressplattenbewegungsvorrichtung dazu eingerichtet ist, ein im Pressbereich positioniertes und angehaltenes Waffelsandwich anzuheben und in einem Pressvorgang deckungsgleich flächig auf ein unterhalb des angehobenen Waffelsandwichs im Pressbereich positioniertes und angehaltes, mit einer Füllungsschicht versehenes, zweites Waffelgrundblatt aufzupressen.

Gegebenenfalls ist vorgesehen, dass entlang der ersten Förderfläche mehrere Fördervorrichtungen zur Förderung der Waffelgrundblätter zum Sandwichformer und zur Pressstation vorgesehen sind.

Gegebenenfalls ist vorgesehen, dass die Fördervorrichtungen jeweils einen Band- oder Riemenförderer umfassen.

Gegebenenfalls ist vorgesehen, dass die Fördervorrichtungen jeweils mit variabler und/oder einstellbarer Geschwindigkeit durch einen Asynchronmotor mit Frequenzumrichter angetrieben sind.

Gegebenenfalls ist vorgesehen, dass die Fördervorrichtungen jeweils einen Detektor zur Detektion eines auf der Fördervorrichtung beförderten Waffelgrundblattes oder Waffelsandwichs aufweisen.

Gegebenenfalls ist vorgesehen, dass die Steuerung der Fördervorrichtungen über eine zentrale Steuerungseinrichtung der Anlage erfolgt.

Gegebenenfalls ist vorgesehen, dass der Sandwichformer einen Sandwich-Bandförderer mit einem Positionierantrieb zur stopperlosen Positionierung des ersten Waffelgrundblattes aufweist.

Gegebenenfalls ist vorgesehen, dass die Pressstation einen Press- Bandförderer mit einem Positionierantrieb zur stopperlosen Positionierung des Wafffelsandwichs und/oder eines Waffelgrundblattes aufweist.

Gegebenenfalls ist vorgesehen, dass unterhalb des oberen Trums des Press-Bandförderers eine Gegenhalterplatte zur Bildung eines Widerlagers bei dem Pressvorgang vorgesehen ist.

Die Abtransportrichtung ist jene Richtung, in die das Waffelgrundblatt zusammen mit dem Waffeldeckblatt aus dem Sandwichformerbereich bzw. aus dem Sandwichformer abtransportiert wird. In der Regel entspricht die Abtransportrichtung der allgemeinen Förderrichtung der Anlage.

Die Waffelgrundblätter werden in einer Füllungsauftragsvorrichtung mit einer Füllungsschicht versehen. Insbesondere werden alle Waffelgrundblätter in der Füllungsauftragsvorrichtung mit einer Füllungsschicht versehen. Die Waffeldeckblätter werden bevorzugt vor der Füllungsauftragsvorrichtung entnommen und nach der Füllungsauftragsvorrichtung im Sandwichformer wieder zugeführt. Die Waffeldeckblätter weisen folglich keine Füllungsschicht auf.

Die vordere Kante des Waffeldeckblattes wird im Sandwichformer mit der vorderen Kante des Waffelgrundblattes in Kontakt gebracht. Insbesondere liegt die vordere Kante des Waffeldeckblattes dadurch auf der Füllungsschicht des Waffelgrundblattes auf. Durch Adhäsionskräfte kleben die beiden Waffelblätter dadurch im Bereich ihrer vorderen Kanten aneinander. Durch Abtransport des Waffelgrundblattes wird folglich auch das Waffeldeckblatt mitgezogen. Das Waffelgrundblatt und das Waffeldeckblatt sind bei dieser Konfiguration anfänglich V-förmig bzw. keilförmig angeordnet, wobei die Spitze der V-Form bzw. des Keils in Abtransportrichtung weist. Die hinteren Kanten der Waffelblätter weisen hierbei bevorzugt einen Abstand zueinander auf. Durch Abtransport des Waffelgrundblattes legt sich das Waffeldeckblatt auf das Waffelgrundblatt bzw. auf dessen Füllungsschicht. Hierbei wirken unterschiedliche Kräfte auf das Waffeldeckblatt. Einerseits wird das Waffeldeckblatt durch die Bewegung und die keilförmige Anordnung Richtung Waffelgrundblatt gedrückt. Zudem ist bevorzugt das Waffeldeckblatt oberhalb des Waffelgrundblattes angeordnet, womit auch die Schwerkraft das Waffeldeckblatt auf das Waffelgrundblatt drückt. Zudem kann unterstützend eine weitere Kraft auf eines der beiden Waffelblätter ausgeübt werden, beispielsweise durch eine Luftdüse oder durch eine mechanische Führung.

Zur Zentrierung des Waffeldeckblattes relativ zum Waffelgrundblatt können unterschiedliche Vorkehrungen getroffen werden. Bevorzugt wird das Waffelgrundblatt in einem Sandwichformbereich positioniert. Der Sandwichformbereich entspricht im Wesentlichen der Fläche des Waffelgrundblattes an einer vorbestimmten Position. Dies bedeutet, dass das Waffelgrundblatt, unter Berücksichtigung der Toleranzen, im Wesentlichen exakt in einem Sandwichformbereich positioniert wird. Der ist in allen Ausführungsformen bevorzugt ortsfest bzw. maschinenfest definiert. Insbesondere kann eine Positioniergenauigkeit von unter 2mm, bevorzugt von unter 1mm entlang der Abtransportrichtung vorgesehen sein.

Die Positionierung des Waffeldeckblattes oberhalb des Waffelgrundblattes soll bevorzugt in derselben Genauigkeit erfolgen. Zur Positionierung des Waffeldeckblattes ist bevorzugt ein Stopper vorgesehen, an den das Waffeldeckblatt angelegt wird, um eine ausreichend genaue Positionierung zu erreichen. Bevorzugt ist das Waffeldeckblatt in dieser Position im Bereich seiner vorderen Kante auf einem vorderen Auflager und im Bereich seiner hinteren Kante auf einem hinteren Auflager aufgelagert. Durch Bewegen, insbesondere durch Entfernen, des vorderen Auflagers wird die vordere Kante des Waffeldeckblattes mit der vorderen Kante des Waffelgrundblattes in Kontakt gebracht. Bevorzugt wird die vordere Kante des Waffeldeckblattes auf die vordere Kante des Waffelgrundblattes abgesenkt. Das hintere Auflager ist insbesondere derart ausgestaltet, dass es zwar eine Auflagerung des Waffeldeckblattes ermöglicht, jedoch eine Bewegung des Waffeldeckblattes entlang der Abtransportrichtung nicht behindert. Dadurch kann das Waffeldeckblatt durch Abtransport des Waffelgrundblattes von dem hinteren Auflager gezogen werden, sodass es sich auf das Waffelgrundblatt bzw. auf dessen Füllschicht legen kann.

Die Positionierung des Waffelgrundblattes im Sandwichformbereich geschieht bevorzugt stopperlos durch den als Positionierband ausgeführten Sandwich-Bandförderer, also durch einen speziell ausgeführten Bandförderer des Sandwichformers. Bevorzugt ist ein Detektor wie beispielsweise eine Lichtschranke vorgesehen, die der Steuerungseinrichtung des Sandwich-Bandförderers oder der Steuerungseinrichtung Anlage ein Signal übermittelt, das eine Information zur Position bzw. zum Zeitpunkt einer bestimmten Position enthält. Zudem umfasst der Sandwich-Bandförderer bevorzugt einen Positionierantrieb, der eine exakte Positionierung des Waffelgrundblattes ermöglicht. Dieser Positionierantrieb kann beispielsweise ein Servoantrieb oder ein anderer gesteuerter oder geregelter Positionierantrieb sein. Gegebenenfalls kann der Positionsantrieb ein Asynchronmotor mit einem Encoder mit ausreichend hoher Auflösung sein.

Als stopperlose Positionierung wird insbesondere eine Positionierung bezeichnet, die ohne mechanischen Stopper oder Anschlag, also bevorzugt rein durch einen Bandförderer erfolgt. Durch die stopperlose, exakte Positionierung des Waffelgrundblattes können Komponenten wie beispielsweise einfahrbare Anschläge entfallen.

Entlang der ersten Förderfläche sind bevorzugt mehrere Fördervorrichtungen vorgesehen. Diese Fördervorrichtungen können zur Positionierung der einzelnen Waffelgrundblätter gegenüber einander mit unterschiedlichen Fördergeschwindigkeiten betrieben werden. Insbesondere wird das erste Waffelgrundblatt, das in dem Sandwichformer mit dem Waffeldeckblatt belegt wird, um das Waffelsandwich zu bilden, vor dem Sandwichformer derart beschleunigt, dass der erste Abstand größer ist als der zweite Abstand. Insbesondere ist der erste Abstand so groß gewählt, dass bei der vorliegenden Fördergeschwindigkeit ausreichend Zeit bleibt, um das erste Waffeldeckblatt anzuhalten und das Waffelsandwich zu bilden. Während der Bildung des Waffelsandwichs können die nachfolgenden Waffelgrundblätter, bevorzugt im Wesentlichen gleichförmig, weitergefördert werden. Die nachfolgenden Waffelgrundblätter können während dieser Förderung jedoch in ihrer Position zueinander und insbesondere auch in ihrer Position relativ zum Waffelsandwich angepasst werden. Auch diese Anpassung geschieht durch eine Wahl oder Veränderung der Geschwindigkeiten der einzelnen Fördervorrichtungen.

Der Abstand der beförderten Waffelgrundblätter kann gegebenenfalls als räumlicher Abstand verstanden werden. Grundsätzlich geht es bei der Wahl der Abstände aber maßgeblich um einen zeitlichen Abstand oder um eine zeitliche Verzögerung, mit dem oder der die einzelnen Waffelblätter in einem bestimmten Bereich der Anlage eintreffen.

Bevorzugt sind auch nach dem Sandwichformer mindestens ein oder zwei Fördervorrichtungen vorgesehen. Diese erlauben eine Positionierung des Waffelsandwichs gegenüber den nachfolgenden Waffelgrundblättern, die in der Pressstation zu einem Waffelzwischenproduktbestandteil bzw. zu dem Waffelzwischenprodukt gestapelt werden.

Die Pressstation umfasst bevorzugt eine Pressplatte, die dazu geeignet und/oder eingerichtet ist, das Waffelsandwich anzuheben und in einem Absenkvorgang auf ein nachfolgendes Waffelgrundblatt bzw. dessen Füllungsschicht abzusenken. Die Bewegung der Pressplatte ist bevorzugt mit der Förderung der Waffelgrundblätter entlang der ersten Förderfläche synchronisiert, sodass ein Absenken des an der Pressplatte gehaltenen Waffelsandwichs oder des Waffelzwischenproduktbestandteils im Wesentlichen ohne Totzeit oder mit minimalen Totzeiten erfolgen kann. Die zeitliche Steuerung der Bewegung der Pressplatte ist bevorzugt nicht abhängig von einem Sensor, der das Waffelgrundblatt unmittelbar im Pressbereich detektiert. Vielmehr werden die Bestandteile zur Bildung des Waffelzwischenproduktes, insbesondere das Waffelsandwich und ein oder mehrere Waffelgrundblätter, der Pressstation zeitlich optimiert zugeführt, sodass die Totzeiten minimiert werden.

Zum Positionieren und Anhalten des Waffelgrundblattes im Pressbereich ist bevorzugt ein Press-Bandförderer vorgesehen. Bevorzugt geschieht auch das Anhalten und Positionieren des Waffelgrundblattes im Pressbereich stopperlos. Der Pressbereich entspricht im Wesentlichen der Größe des Waffelgrundblattes, wobei auch hier etwaige Toleranzen berücksichtigt werden. Insbesondere kann eine Positioniergenauigkeit entlang der Transportrichtung von weniger als 2mm, insbesondere von weniger als 1mm erzielt werden. Der Press-Bandförderer kann gleich ausgebildet sein wie der Sandwich-Bandförderer. Zusätzlich kann der Press-Bandförderer jedoch unterhalb des oberen Trums oder Abschnittes eine Gegenhalterplatte umfassen, die als Widerlager zur Aufnahme der Kräfte der Pressstation bzw. der Pressplatte dient. Bevorzugt ist die Pressstation dazu eingerichtet, das Waffelzwischenprodukt zu kalibrieren. Dies bedeutet insbesondere, dass das Waffelzwischenprodukt auf eine Höhe zusammengedrückt wird, die einer vorbestimmten Höhe des Waffelzwischenproduktes entspricht. Dadurch können alle produzierten Waffelzwischenprodukte im Wesentlichen auf dieselbe Höhe kalibriert werden.

Der Press-Bandförderer umfasst bevorzugt einen Positionierantrieb, der eine exakte Positionierung des Waffelgrundblattes ermöglicht. Dieser Positionierantrieb kann beispielsweise ein Servoantrieb oder ein anderer gesteuerter oder geregelter Positionierantrieb sein. Gegebenenfalls kann der Positionsantrieb ein Asynchronmotor mit einem Encoder mit ausreichend hoher Auflösung sein.

Bevorzugt umfasst jede Fördervorrichtung einen Detektor. Bevorzugt umfasst der Sandwich-Bandförderer einen Detektor. Bevorzugt umfasst der Press-Bandförderer einen Detektor. Die Detektoren sind dazu geeignet und/oder eingerichtet, ein Signal bereitzustellen, das Informationen zur Position des geförderten Waffelgrundblattes gibt. Dadurch kann eine Steuerung bzw. Regelung der Geschwindigkeiten der einzelnen Antriebe erfolgen, um die Waffelgrundblätter und gegebenenfalls das Waffelsandwich, während der Bewegung oder in angehaltenem Zustand zu positionieren.

In weiterer Folge wird die Erfindung anhand der Figuren weiter beschrieben.

**Figur 1** zeigt eine schematische Seitenansicht von Komponenten einer Anlage zur Bildung von Waffelzwischenprodukten.

Die **Figuren 2, 3 und 4** zeigen Komponenten eines Sandwichformers in unterschiedlichen Stellungen und Verfahrensschritte zur Bildung eines Waffelsandwichs.

**Figur 5** zeigt eine schematische Ansicht von Komponenten einer Pressstation.

**Figur 6** zeigt schematische Diagramme von Bewegungen einzelner Komponenten einer Anlage.

Wenn nicht anders angegeben, so entsprechen die Bezugszeichen in der Figuren folgenden Merkmalen: Waffelzwischenprodukt 1, Waffelgrundblatt 2, erste Förderfläche 3, Sandwichformer 4, Sandwichformerbereich 5, Waffeldeckblatt 6, zweite Förderfläche 7, Abtransportrichtung 8, vordere Kante (des Waffeldeckblattes) 9, hintere Kante (des Waffeldeckblattes) 10, vordere Kante (des Waffelgrundblattes) 11, Gasstrahl 12, Stopper 13, vorderes Auflager 14, hinteres Auflager 15, Sandwich-Bandförderer 16, Füllungsauftragsvorrichtung 17, Pressbereich 18, Pressplatte 19, Waffelsandwich 20, Waffelzwischenproduktbestandteil 21, Fördervorrichtung 22, erster Abstand 23, zweiter Abstand 24, dritter Abstand 25, vierter Abstand 26, Auflagerbewegungsvorrichtung 27, Pressplattenbewegungsvorrichtung 28, Steuerungseinrichtung 29, Press-Bandförderer 30, Gegenhalterplatte 31, Detektor 32, Pressstation 33.

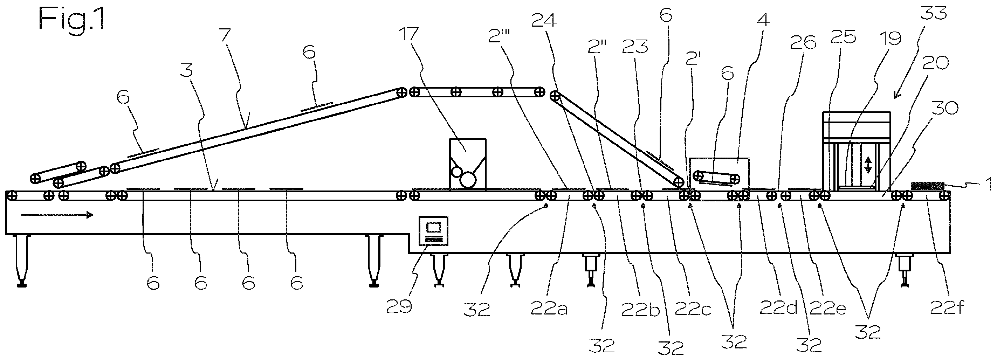

**Figur 1** zeigt eine schematische Seitenansicht einer Anlage zur Bildung von Waffelzwischenprodukten 1. Entlang einer ersten Förderfläche 3 sind eine Füllungsauftragsvorrichtung 17, ein Sandwichformer 4 und eine Pressstation 33 vorgesehen. Die erste Förderfläche 3 ist zumindest abschnittsweise durch Fördervorrichtungen 22, in dieser Ausführungsform insbesondere durch die Fördervorrichtungen 22a bis 22f gebildet. Zudem kann die erste Förderfläche 3 abschnittsweise auch durch andere Komponenten gebildet werden. Im Bereich des Sandwichformers 4 ist die erste Förderfläche 3 beispielsweise durch einen Sandwich-Bandförderer 16 gebildet. Im Bereich der Pressstation 33 ist die erste Förderfläche 3 beispielsweise durch den Press-Bandförderer 30 gebildet.

Die Anlage umfasst eine zweite Förderfläche 7. Die zweite Förderfläche 7 läuft zumindest abschnittsweise parallel zur ersten Förderfläche 3 oder neben der ersten Förderfläche 3 und mündet in den oder an den Sandwichformer 4. Ausgangspunkt der Herstellung ist eine gattungsgemäße Backvorrichtung zur Herstellung der Waffeln, aus der Waffelblätter üblicherweise in regelmäßigen Abständen ausgegeben werden. Diese werden dann meist gekühlt und über eine oder mehrere Fördervorrichtungen 22 zu der Anlage befördert. Je nachdem, wie viele Waffelschichten das zu bildende Waffelzwischenprodukt 1 haben soll, wird zur Bildung eines Waffelsandwichs 20 in regelmäßigen Abständen ein Waffelblatt entnommen und entlang der zweiten Förderfläche 7 als Waffeldeckblatt 6 zum Sandwichformer 4 transportiert. Alle anderen Waffelblätter werden zur Bildung von Waffelgrundblättern 2 entlang der ersten Förderfläche 3 zu der Füllungsauftragsvorrichtung 17 befördert. Bevorzugt sind mehrere, mindestens zwei, Fördervorrichtungen 22 entlang der ersten Förderfläche 3 vor der Füllungsauftragsvorrichtung 17 vorgesehen. Die Geschwindigkeiten dieser Fördervorrichtungen 22 werden bevorzugt derart gewählt, dass die Waffelgrundblätter 2 im Bereich der Füllungsauftragsvorrichtung 17 Stoß an Stoß liegen und dadurch eine im Wesentlichen durchgehende Fläche bilden. Diese durchgehende Fläche kann dann beispielsweise mit einer durchgehenden Füllungsschicht, insbesondere mit einer essbaren Masse versehen werden. Insbesondere kann dies über einen sogenannten Cremestreichkopf oder über eine Filmstreichmaschine erfolgen, die einen Cremefilm kontinuierlich ausgibt. Alternativ kann die Füllungsauftragsvorrichtung 17 auch als Vorrichtung ausgebildet sein, bei der die Waffelgrundblätter 2 einzeln und nicht Stoß an Stoß mit einer Füllung versehen werden. Die Füllungsauftragsvorrichtung 17 kann insbesondere als herkömmliche Füllungsauftragsvorrichtung 17 ausgebildet sein. Gegebenenfalls können auch mehrere Füllungsauftragsvorrichtungen 17 vorgesehen sein.

Nach der Füllungsauftragsvorrichtung 17 werden die mit einer Füllungsschicht versehenen Waffelgrundblätter 2 entlang der ersten Förderfläche 3 weiter zu einem Sandwichformer 4 befördert. Die Fördervorrichtungen 22, in dieser Ausführungsform die Fördervorrichtungen 22a, 22b und 22c, werden insbesondere derart betrieben, dass die Waffelgrundblätter 2 zueinander wieder einen Abstand aufweisen und insbesondere, dass die Waffelgrundblätter 2 beabstandet voneinander entlang der ersten Förderfläche 3 befördert werden.

In der Regel weisen die zu bildenden Waffelzwischenprodukte 1 drei bis fünf Waffelschichten aus Waffelblättern auf. Weist das zu bildende Waffelzwischenprodukt 1 nur drei Waffelschichten auf, so ist das Waffelsandwich 20 bereits das Waffelzwischenprodukt 1.

In der vorliegenden Ausführungsform der Figur 1 wird beispielsweise ein Waffelzwischenprodukt 1 mit vier Waffelblättern und daher mit drei Füllungsschichten gebildet. Hierzu werden nacheinander ein erstes Waffelgrundblatt 2', ein zweites Waffelgrundblatt 2" und ein drittes Waffelgrundblatt 2‴ Richtung Sandwichformer 4 befördert. Als viertes Waffelblatt wird ein Waffeldeckblatt 6 über die zweite Förderfläche 7 zum Sandwichformer 4 befördert. Die Waffelgrundblätter 2 weisen im Bereich vor dem Sandwichformer 4 jeweils gewisse Abstände zueinander auf. Zwischen dem ersten Waffelgrundblatt 2' und dem zweiten Waffelgrundblatt 2" ist ein erster Abstand 23 vorgesehen. Zwischen dem zweiten Waffelgrundblatt 2" und dem dritten Waffelgrundblatt 2‴ ist ein zweiter Abstand 24 vorgesehen. Die Fördervorrichtungen 22, insbesondere die Fördervorrichtungen 22a, 22b, 22c werden in diesem Bereich nun bevorzugt derart betrieben, dass der erste Abstand 23 größer ist als der zweite Abstand 24.

Insbesondere kann der Abstand der beförderten Waffelgrundblätter 2 als räumlicher Abstand verstanden werden. Grundsätzlich geht es bei der Wahl der Abstände aber maßgeblich um einen zeitlichen Abstand, mit dem die einzelnen Waffelblätter im Sandwichformer 4 und/oder in der Pressstation 33 eintreffen.

Vor dem Sandwichformer 4 ist der erste Abstand 23 insbesondere derart gewählt, dass ausreichend Zeit bleibt, um das Waffelgrundblatt 2' in dem Sandwichformer 4 anzuhalten und das Waffelsandwich 20 zu bilden. Während der Bildung des Waffelsandwichs 20 können die nachfolgenden Waffelgrundblätter 2" und 2‴ weiterbefördert werden.

Insbesondere kann der erste Abstand 23 so gewählt werden, dass das gebildete Waffelsandwich 20, das zweite Waffelgrundblatt 2" und das dritte Waffelgrundblatt 2‴ nach dem Sandwichformer 4 im Wesentlichen dieselben Abstände zueinander aufweisen.

Zur Bildung eines Waffelsandwichs 20 wird in der vorliegenden Ausführungsform nur das erste Waffelgrundblatt 2' mit einem Waffeldeckelblatt 6 abgedeckt. Das zweite Waffelgrundblatt 2" und das dritte Waffelgrundblatt 2‴ werden durch den Sandwichformer 4 hindurch gefördert oder vorbei gefördert, ohne ein Sandwich zu bilden.

Dadurch werden entlang der ersten Förderfläche 3 nach dem Sandwichformer 4 ein Waffelsandwich 20 und nachfolgend das zweite Waffelgrundblatt 2" sowie das dritte Waffelgrundblatt 2‴ befördert. Die Waffelgrundblätter 2 sind jeweils mit einer Füllungsschicht versehen.

Bei Ausführungsformen, bei denen Waffelzwischenprodukte 1 mit mehr oder weniger Schichten gebildet werden sollen, wird in analoger Weise die Zahl der Waffelgrundblätter 2 variiert.

In einer Pressstation 33 wird das Waffelsandwich 20 angehalten und durch die Pressplatte 19 oder an der Pressplatte 19 von der ersten Förderfläche 3 abgehoben. Gleichzeitig oder danach wird das zweite Waffelgrundblatt 2" unterhalb der Pressplatte 19 und damit auch unterhalb des abgehobenen Waffelsandwichs 20 in einem Pressbereich 18 positioniert und angehalten. In weiterer Folge senkt die Pressplatte 19 das Waffelsandwich 20 auf das mit einer Füllungsschicht versehene zweite Waffelgrundblatt 2" und drückt das Waffelsandwich 20 auf diese Füllungsschicht. Dadurch kommt es zu einer Verbindung des zweiten Waffelgrundblattes 2" mit dem Waffelsandwich 20 zu einem Waffelzwischenproduktbestandteil 21. In weiterer Folge wird die Pressplatte 19 der Pressstation 33 wieder angehoben um das dritte Waffelgrundblatt 2‴ zuzuführen und in analoger Weise mit dem an der Pressplatte 19 vorgesehenen Waffelzwischenproduktbestandteil 21 zu verbinden.

Ist das Waffelzwischenprodukt 1 fertig gebildet und bevorzugt auch kalibriert, so wird es auf die erste Förderfläche 3 abgelegt. Das Waffelzwischenprodukt 1 kann dann entlang der ersten Förderfläche 3 abtransportiert werden.

Die Fördervorrichtungen 22, insbesondere die Fördervorrichtungen 22d und 22e, werden vor der Pressstation 33 bevorzugt derart betrieben, dass das Waffelsandwich 20 und die Waffelgrundblätter 2 der Pressstation 33 zeitlich optimiert zugeführt werden. Der dritte Abstand 25, also der Abstand zwischen dem Waffelsandwich 20 und dem zweiten Waffelgrundblatt 2", ist im Wesentlichen gleich groß ist wie der vierte Abstand 26, also der Abstand zwischen dem zweiten Waffelgrundblatt 2" und dem dritten Waffelgrundblatt 2‴.

Gegebenenfalls sind an diese Anlage weitere Stationen wie beispielsweise eine Schneidstation zum Zerschneiden oder Vereinzeln des Waffelzwischenproduktes 1 zu Waffelschnitten vorgesehen. Gegebenenfalls ist eine Verpackungsmaschine vorgesehen, um die gebildeten Waffelprodukte zu verpacken.

In allen Ausführungsformen können die Fördervorrichtungen 22, in dieser Ausführungsform die Fördervorrichtungen 22a bis 22f, als Antrieb einen Asynchronmotor mit Frequenzumrichter umfassen. Für die Steuerung und/oder Regelung der Geschwindigkeiten der Fördervorrichtungen 22, insbesondere zur Wahl der Abstände zwischen den einzelnen Waffelgrundblättern 2, sind bevorzugt in allen Ausführungsformen mehrere Detektoren 32 vorgesehen. Insbesondere umfasst jede Fördervorrichtung 22 einen Detektor 32 oder jeder Fördervorrichtung 22 ist ein Detektor 32 zugeordnet. Bevorzugt ist der Detektor 32 ein Sensor, insbesondere ein optischer Sensor und beispielsweise eine Lichtschranke. Der Detektor 32 nimmt bevorzugt ein Signal auf, das Aufschluss darüber gibt, wann ein Waffelgrundblatt 2 an einem bestimmten Ort ist. Über die Dauer der Detektion bzw. der Unterbrechung einer Lichtschranke kann gegebenenfalls auch die Geschwindigkeit des Waffelgrundblattes 2 festgestellt werden. Zusätzlich oder alternativ kann das Geschwindigkeitssignal jedoch auch auf Basis der Daten des Antriebs der jeweiligen Fördervorrichtung 22 ermittelt werden.

Bevorzugt ist vorgesehen, dass jede Fördervorrichtung 22 jeweils einen Detektor 32 umfasst, der zusammen mit dieser Fördervorrichtung 22 eine steuerungstechnische Einheit bildet, um eine zeitliche Steuerung der Bewegung der Waffelgrundblätter 2 vornehmen zu können.

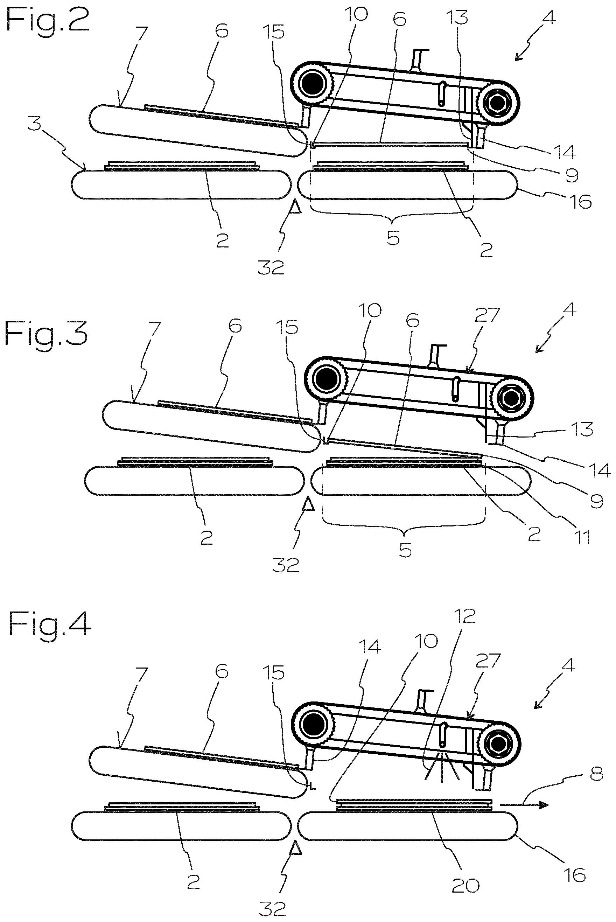

Die **Figuren 2, 3** und **4** zeigen einen Sandwichformer 4 in unterschiedlichen Stellungen. Grundsätzlich ist der Sandwichformer 4 dazu eingerichtet, ein Waffelsandwich 20 zu bilden. Ein Waffelsandwich 20 ist ein Waffelzwischenprodukt 1 oder ein Waffelzwischenproduktbestandteil 21, bestehend aus einem Waffelgrundblatt 2 mit einer auf dem Waffelgrundblatt 2 vorgesehenen Füllungsschicht und mit einem Waffeldeckblatt 6, das die Füllungsschicht des Waffelgrundblattes 2 abdeckt. Die Füllungsschicht kann in allen Ausführungsformen flächig, teilflächig oder punktuell auf dem Waffelgrundblatt angeordnet sein. Das Waffelgrundblatt 2 und das Waffeldeckblatt 6 sind im Wesentlichen deckungsgleich flächig aufeinander gelegt, wobei zwischen dem Waffelgrundblatt 2 und dem Waffeldeckblatt 6 die Füllungsschicht vorgesehen ist. Zur Bildung des Waffelsandwichs 20 wird ein mit einer Füllungsschicht versehenes Waffelgrundblatt 2 entlang der ersten Förderfläche 3 in den Sandwichformer 4 befördert. Der Sandwichformer 4 umfasst in der vorliegenden Ausführungsform einen Sandwich-Bandförderer 16. Dieser Sandwich-Bandförderer 16 ist dazu geeignet und/oder eingerichtet, das Waffelgrundblatt 2 stopperlos in einem Sandwichformerbereich 5 zu positionieren und anzuhalten. Der Sandwichformerbereich 5 entspricht im Wesentlichen einem Bereich mit derselben Größe wie das Waffelgrundblatt 2, wobei bestimmte Toleranzen bei der Positionierung akzeptiert werden. Insbesondere soll eine Positionsgenauigkeit von weniger als 5mm, bevorzugt von weniger als 2mm und besonders bevorzugt von weniger als 1mm bei der Positionierung des Waffelgrundblattes 2 entlang der ersten Förderfläche 3 vorliegen. Gleichzeitig, davor oder danach wird über eine zweite Förderfläche 7 ein Waffeldeckblatt 6 zugeführt. Das Waffeldeckblatt 6 wird so genau wie erforderlich oberhalb des Sandwichformerbereichs 5 und des gegebenenfalls darin angeordneten Waffelgrundblattes 2 positioniert und angehalten. Bei der vorliegenden Ausführungsform wird das Waffeldeckblatt 6 solange entlang der zweiten Förderfläche 7 in den Sandwichformer 4 befördert, bis es an einem Stopper 13 ansteht oder in dem Stopper 13 aufliegt. Der Stopper 13 kann in allen Ausführungsformen ein Anschlag, ein Stift, ein Steg, ein Winkel oder ein ähnliches Element sein. In dieser Position wird das Waffeldeckblatt 6 in weiterer Folge mit dem Waffelgrundblatt 2 in Kontakt gebracht und insbesondere auf das Waffelgrundblatt 2 abgesenkt, um ein Waffelsandwich 20 zu bilden.

In der vorliegenden Ausführungsform sind ein vorderes Auflager 14 und ein hinteres Auflager 15 vorgesehen. Das Waffeldeckblatt 6 ist, wie in Figur 2 gezeigt, in seinem vorderen Bereich bzw. im Bereich seiner vorderen Kante 9 auf einem vorderen Auflager 14 aufgelagert. Im Bereich der hinteren Kante 10 des Waffeldeckblattes 6 ist es auf dem hinteren Auflager 15 aufgelagert. Wie in Figur 3 zu sehen ist, wird in einem nächsten Schritt die vordere Kante 9 des Waffeldeckblattes 6 mit der vorderen Kante 11 des Waffelgrundblattes 2 in Kontakt gebracht, wobei die vordere Kante 9 des Waffeldeckblattes 6 insbesondere auf die Füllungsschicht des Waffelgrundblattes 2 aufgelegt wird. Dadurch weisen das Waffelgrundblatt 2 und Waffeldeckblatt 6 in dieser Stellung eine V-förmige bzw. keilförmige Anordnung auf. In der vorliegenden Ausführungsform wird die vordere Kante 9 des Waffeldeckblattes 6 insbesondere dadurch mit der vorderen Kante 11 des Waffelgrundblattes 2 in Kontakt gebracht, dass das vordere Auflager 14 über eine Auflagerbewegungsvorrichtung 27 bewegt wird.

In der vorliegenden Ausführungsform sind mehrere vordere Auflager 14 entlang eines Transportbandes einer Auflagerbewegungsvorrichtung 27 vorgesehen. Dieses Transportband kann über einen Antrieb bewegt werden. Das vordere Auflager 14 greift gegebenenfalls bereits bei der Zuführung des Waffeldeckblattes 6 und vor der dem Stopper 13 unter die vordere Kante 9 des Waffeldeckblattes 6. Dabei ist die vordere Kante 9 des Waffeldeckblattes 6 bereits während der Weiterförderung des Waffeldeckblattes 6 in einem Bereich oberhalb des Sandwichformerbereichs 5 auf dem vorderen, bewegbar angeordneten, Auflager 14 aufgelagert.

In weiterer Folge wird das Waffeldeckblatt 6 dadurch genau positioniert, dass es an einem Stopper 13 ansteht. Gegebenenfalls kann jedoch auch die Bewegung des vorderen Auflagers 14 bzw. die Auflagerbewegungsvorrichtung 27 derart positionsgesteuert sein, dass eine exakte Positionierung oberhalb des Sandwichformerbereichs 5 erfolgen kann. Grundsätzlich kann alternativ jede technische Einrichtung eingesetzt werden, die eine exakte Positionierung des Waffeldeckblattes 6 oberhalb des Sandwichformerbereichs 5 ermöglicht.

In der vorliegenden Ausführungsform wird das vordere Auflager 14 weiterbewegt, wobei aber das Waffeldeckblatt 6 am Stopper 13 ansteht. Dadurch wird das Waffeldeckblatt 6, bzw. dessen vordere Kante 9, vom vorderen Auflager 14 abgestriffen und dadurch nicht mehr von unten unterstützt. Dadurch fällt, wie in Figur 3 gezeigt, die vordere Kante 9 des Waffeldeckblattes 6 auf die vordere Kante 11 des Waffelgrundblatts 2. Diese Bewegung kann gegebenenfalls durch mechanische oder pneumatische Kräfte unterstützt werden. Insbesondere kann ein Gasstrahl 12 eingesetzt werden, um das Waffeldeckblatt 6 Richtung Waffelgrundblatt 2 zu drücken.

In **Figur 4** ist eine weitere Stellung des Sandwichformers 4 gezeigt. In diesem Schritt wird das Waffelgrundblatt 2 durch betätigen des Sandwich-Bandförderers 16 entlang der Abtransportrichtung 8 abtransportiert. Dadurch, dass das Waffeldeckblatt 6 zumindest mit einer Kante am Waffelgrundblatt 2 aufliegt, wie in Fig. 3 gezeigt, wird das Waffeldeckblatt 6 vom Waffelgrundblatt 2 mitgezogen und legt sich in weiterer Folge flächig und deckungsgleich auf das Waffelgrundblatt 2 bzw. auf dessen Füllungsschicht. Diese Bewegung kann beispielsweise durch einen Gasstrahl 12 unterstützt werden. Zudem hilft aber auch die V-förmige bzw. keilförmige Anordnung und insbesondere die Schrägstellung des Waffeldeckblattes 6 relativ zur Abtransportrichtung 8.

In der Position der Figur 4 kann das nächste vordere Auflager 14 bereits zur Auflagerung der vorderen Kante 9 mit dem nächsten Waffeldeckblatt 6 in Eingriff stehen.

Ein Detektor 32 zur Detektion der Waffelgrundblätter 2 kann dabei helfen, eine stopperlose und exakte Positionierung der Waffelgrundblätter 2 auf dem Sandwich-Bandförderer 16 zu erzielen.

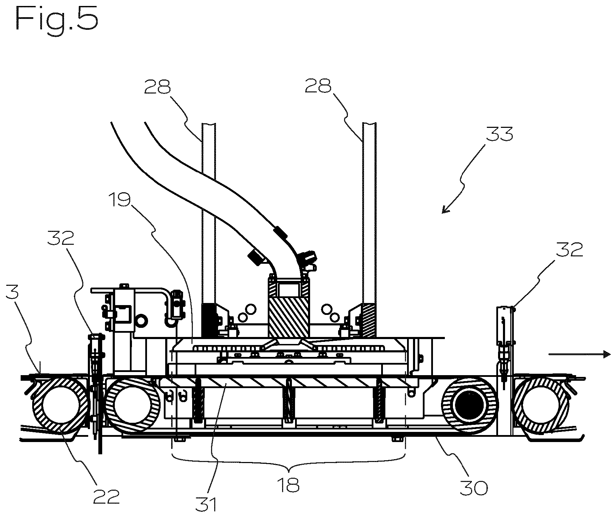

Ist das Waffelsandwich 20 gebildet, so wird es entlang der Abtransportrichtung 8 weiter transportiert. Soll noch eine weitere Schicht zur Bildung des Waffelzwischenproduktes 1 an das Waffelsandwich 20 angebracht werden, so ist bevorzugt vorgesehen, dass zumindest das nachfolgende, mit einer Füllschicht versehene, Waffelgrundblatt 2 durch den Sandwichformer 4 hindurch oder am Sandwichformer 4 vorbei befördert wird, ohne dass ein Waffeldeckblatt 6 aufgelegt wird. Eine Stapelung weiterer Schichten mit dem Waffelsandwich 20 kann in einer Pressstation 33 erfolgen. Diese Pressstation 33 kann gemäß Stand der Technik oder gemäß Figur 5 ausgebildet sein.

**Figur 5** zeigt eine Ausführungsform einer Pressstation 33. Diese Pressstation kann mit der Anlage gemäß Fig.1 und dem Sandwichformer 4 gemäß den Figuren 2-4 kombiniert werden. Grundsätzlich kann die Pressstation 33 aber auch alleine oder in Kombination mit einem herkömmlichen Sandwichformer 4 oder einer herkömmlichen Anlage eingesetzt werden. Die Pressstation 33 umfasst eine Pressplatte 19, die über eine Pressplattenbewegungsvorrichtung 28 bewegt und insbesondere auf und ab bewegt werden kann. Hierzu kann die Pressplattenbewegungsvorrichtung 28 beispielsweise einen Linearantrieb zur Bewegung der Pressplatte 19 und eine Führungsvorrichtung zur Führung, insbesondere zur Parallelführung, der Pressplatte 19 umfassen.

Die Pressplatte 19 ist dazu geeignet und/oder eingerichtet, das Waffelsandwich 20 von einem Press-Bandförderer 30 abzuheben. Insbesondere wird ein erstes Waffelgrundblatt 2' (nicht dargestellt) in dem Pressbereich 18 der Pressstation 33 befördert. Der Pressbereich 18 entspricht im Wesentlichen der Größe eines Waffelsandwichs 20 bzw. eines Waffelgrundblattes 2, wobei gewisse Lagetoleranzen akzeptiert werden. Insbesondere ist der Press-Bandförderer 30 dazu geeignet und/oder eingerichtet, eine Lagegenauigkeit von unter 5mm, bevorzugt von unter 2mm zu ermöglichen. Das in einem Sandwichformer 4 geformte Waffelsandwich 20 wird entlang der ersten Förderfläche 3 in den Pressbereich 18 befördert, dort positioniert und angehalten. Das Positionieren und Anhalten erfolgt bevorzugt stopperlos durch den Press-Bandförderer 30. Dieser umfasst bevorzugt einen Positionierantrieb, der eine exakte Positionierung ermöglicht.

In weiterer Folge wird die Pressplatte 19 der Pressstation 33 auf das Waffelsandwich 20 abgesenkt. Das Waffelsandwich 20 wird an der Pressplatte 19 gehalten und die Pressplatte 19 wird über die Pressplattenbewegungsvorrichtung 28 wieder angehoben. Dadurch wird auch das Waffelsandwich 20 von der ersten Förderfläche 3 abgehoben.

Die Halterung des Waffelsandwichs 20 an der Pressplatte 19 kann, wie in dieser Ausführungsform, durch eine als Unterdruckplatte ausgeführte Pressplatte 19 erfolgen. Eine Unterdruckquelle ist an mehrere Öffnungen der Pressplatte 19 angeschlossen, wobei diese Öffnungen der Pressplatte 19 durch das Waffelsandwich 20 zumindest teilweise verschlossen werden. Die Unterdruckkraft hält dadurch das Waffelsandwich 20 an der Pressplatte 19.

Während dem Abheben oder danach wird entlang der ersten Förderfläche 3 ein mit einer Füllungsschicht versehenes zweites Waffelgrundblatt 2"(nicht dargestellt) zugeführt, im Pressbereich 18 positioniert und angehalten. In einem nächsten Schritt oder währenddessen senkt die Pressplattenbewegungsvorrichtung 28 die Pressplatte 19 und das an ihr gehaltene Waffelsandwich 20 auf das nachfolgende zweite Waffelgrundblatt 2". Dadurch wird das Waffelsandwich 20 auf die Füllungsschicht des zweiten Waffelgrundblattes 2" aufgelegt und angepresst. Das Waffelsandwich 20 und das angepresste zweite Waffelgrundblatt 2" bilden zusammen einen Waffelzwischenproduktbestandteil 21. Dieser wird in einem nächsten Schritt wiederum von der ersten Förderfläche 3 abgehoben und ein weiteres, drittes Waffelgrundblatt 2‴ kann in analoger Weise an dem Waffelzwischenproduktbestandteil 21 angebracht werden.

Ist die vorab gewünschte Anzahl an Schichten hergestellt, so ist das Waffelzwischenprodukt 1 fertig gebildet und kann von der Pressplatte 19 auf der ersten Förderfläche 3 abgelegt und abtransportiert werden.

Beim Aufpressen der an der Pressplatte 19 gehaltenen Bestandteile erfolgt bevorzugt eine Kalibrierung der Höhe des Waffelzwischenproduktbestandteils 21 aber vorrangig des Waffelzwischenprodukts 1. Eine Zwischenkalibrierung kann bei Zwischenschichten erfolgen. Insbesondere beim letzten Hub, also beim letzten Aufpressen des Waffelzwischenproduktbestandteils 21 oder des Waffelsandwichs 20 auf das letzte Waffelgrundblatt 2, wird die Pressplatte 19 exakt soweit Richtung erste Förderfläche 3 bewegt, dass das Waffelzwischenprodukt 1 auf eine vordefinierte Höhe zusammengedrückt wird. Als Widerlager für die von der Pressplatte 19 ausgehenden Kräfte ist eine Gegenhalterplatte 31 vorgesehen. Diese ist bevorzugt unterhalb des oberen Trums des Press-Bandförderers 30 angeordnet und seitlich an einem Maschinengestell angebracht, um eine ausreichende Stabilität zu haben.

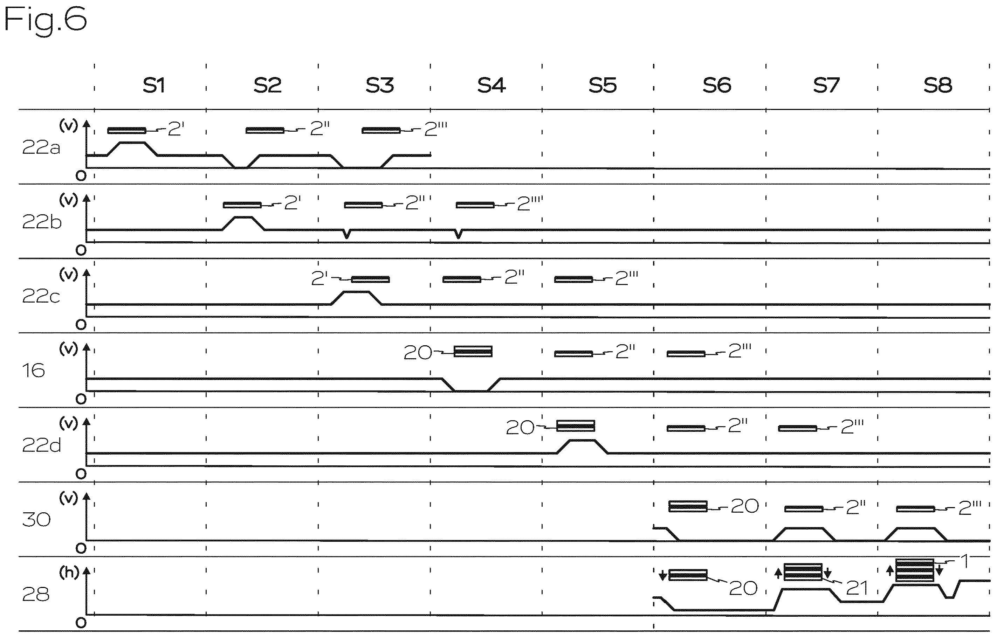

**Figur 6** zeigt ein schematisches Diagramm zur zeitlichen Synchronisation bzw. zur Bewegung der Bestandteile des Waffelzwischenprodukts 1. In den Zeilen des Diagramms sind die entlang der ersten Förderfläche 3 angeordneten Fördervorrichtungen 22 sowie der Sandwich-Bandförderer 16 und der Press-Bandförderer 30 aufgelistet. Die letzte Zeile betrifft die Bewegung der Pressplattenbewegungsvorrichtung 28. Die Spalten entsprechen zeitlichen Abschnitten, sogenannten zeitlichen Slots S1 bis S8. Die einzelnen Graphen der Zeilen sind Geschwindigkeitsgraphen, wobei in der untersten Zeile statt einem Geschwindigkeitsgraph ein Graph zur Darstellung der Höhe der Pressstation 33 dargestellt ist.

Im Zeitabschnitt S1 wird zuerst ein erstes Waffelgrundblatt 2' auf der ersten Fördervorrichtung 22a befördert. Bei diesem wird die Fördergeschwindigkeit der ersten Fördervorrichtung 22a kurzzeitig erhöht.

Im Zeitabschnitt S2 befindet sich das erste Waffelgrundblatt 2' auf der zweiten Fördervorrichtung 22b und das zweite Waffelgrundblatt 2" auf der ersten Fördervorrichtung 22a.

Im Zeitabschnitt S3 befindet sich das erste Waffelgrundblatt 2' auf der dritten Fördervorrichtung 22c, das zweite Waffelgrundblatt 2" auf der zweiten Fördervorrichtung 22b, und das dritte Waffelgrundblatt 2‴ auf der ersten Fördervorrichtung 22a.

In den Zeitbereichen S2 und S3 wird die Geschwindigkeit der ersten Fördervorrichtung 22a kurzzeitig verringert, um den Abstand zwischen dem ersten Waffelgrundblatt 2' und dem zweiten Waffelgrundblatt 2" zu erhöhen. Zudem wird auch der Abstand zwischen dem zweiten Waffelgrundblatt 2" und dem dritten Waffelgrundblatt 2‴ durch eine längere Verzögerung im Zeitbereich S3 vergrößert.

Die Abstände der Waffelgrundblätter 2 gegenüber einander können beispielsweise über einen zwischen den Fördervorrichtungen 22 angeordneten Detektor 32 verifiziert und abgeglichen werden.

Auf der zweiten Fördervorrichtung 22b, dargestellt in der zweiten Zeile, wird die Geschwindigkeit im zweiten Zeitbereich kurz erhöht, wenn das erste Waffelgrundblatt 2' auf der zweiten Fördervorrichtung 22b transportiert wird. Durch diese kurzzeitige Erhöhung der Fördergeschwindigkeit wird der Abstand des ersten Waffelgrundblattes 2' gegenüber den nachfolgenden Waffelgrundblättern 2" und 2‴ weiter erhöht. In den Zeitbereichen S3 und S4 werden die beiden Waffelgrundblätter 2" und 2‴ in dieser Ausführungsform nur noch kurz verzögert, um eine exakte Positionierung bzw. den exakten gewünschten Abstand gegenüber einander und gegenüber dem ersten Waffelgrundblatt 2' einzustellen.

Durch eine Beschleunigung oder Verzögerung der einzelnen Waffelgrundblätter 2 auf den Fördervorrichtungen 22 kann eine gewünschte zeitliche Taktung eingestellt werden.

In der vorliegenden Ausführungsform ist vor dem Sandwichformer 4 noch eine dritte Fördervorrichtung 2c vorgesehen. Auf dieser wird das erste Waffelgrundblatt 2' ein weiteres Mal beschleunigt, um den Abstand zu den nachfolgenden beiden Waffelgrundblättern 2" und 2‴ weiter zu erhöhen. Sind die beiden nachfolgenden Waffelgrundblätter 2" und 2‴ bezüglich ihrer zeitlichen Synchronisation richtig eingestellt, so muss eine weitere Geschwindigkeitsanpassung in den zeitlichen Abschnitten S4 und S5 durch die Fördervorrichtung 22c nicht mehr erfolgen.

In der vorliegenden Ausführungsform geschieht die zeitliche Einstellung der Waffelgrundblätter 2 über drei Fördervorrichtungen 22, also insbesondere über die Fördervorrichtungen 22a, 22b und 22c. Gegebenenfalls kann es ausreichend sein, eine oder zwei Fördervorrichtungen 22 vor dem Sandwichformer 4 vorzusehen, um die gewünschte zeitliche bzw. ortsmäßige Taktung der Waffelgrundblätter 2 herzustellen.

In einem nächsten Schritt, insbesondere im zeitlichen Abschnitt S4, wird das erste Waffelgrundblatt 2' auf dem Sandwich-Bandförderer 16 positioniert und angehalten. Für einen gewissen Zeitraum beträgt die Geschwindigkeit des ersten Waffelgrundblattes 2' deshalb null. Zwischenzeitlich werden die anderen Waffelgrundblätter 2" und 2‴ im zeitlichen Bereich S4 auf den Fördervorrichtungen 22c und 22b weiter gefördert. Nach der Zeit zur Bildung des Waffelsandwichs 20 wird dieses von dem Sandwich-Bandförderer 16 mit einer Geschwindigkeit ungleich null weiter gefördert. Im zeitlichen Bereich S5 wird das Waffelsandwich 20 auf der vierten Fördervorrichtung 22d weiter beschleunigt, um den Abstand zu den nachfolgenden Waffelgrundblättern 2" und 2‴ zu erhöhen. Diese werden im Zeitbereich S5 in der vorliegenden Ausführungsform mit konstanter Geschwindigkeit auf der Fördervorrichtung 22c bzw. auf dem Sandwich-Bandförderer 16 befördert. Die nachfolgenden Blätter werden, wie in den zeitlichen Abschnitten S5 und S6 zu sehen, auf dem Sandwich-Bandförderer 16 nicht angehalten sondern mit konstanter Geschwindigkeit weiter befördert.

Gegebenenfalls kann noch eine fünfte Fördervorrichtung 22e, wie beispielsweise in Fig. 1, oder weitere Fördervorrichtungen 22 vorgesehen sein, um eine weitere Synchronisation der Bestandteile zu ermöglichen.

In der vorliegenden Ausführungsform wird das Waffelsandwich 20 auf dem Press-Bandförderer 30 positioniert und angehalten. In einem nächsten Schritt wird die Pressplattenbewegungsvorrichtung 28 betätigt und die Pressplatte 19 wird auf das Waffelsandwich 20 abgesenkt und das Waffelsandwich 20 wird durch die Pressplatte 19 und eine Aufwärtsbewegung der Pressplattenbewegungsvorrichtung 28 abgehoben. Dies geschieht im vorliegenden Fall während der zeitlichen Abschnitte S6 und S7. In der Zwischenzeit werden die beiden nachfolgenden Waffelgrundblätter 2" und 2‴ auf den Fördervorrichtungen 22 bzw. auf den Sandwich-Bandförderer 16, insbesondere kontinuierlich, weiter befördert. In den zeitlichen Abschnitten S7 und S8 werden dann auch das zweite Waffelgrundblatt 2" und das dritte Waffelgrundblatt 2‴ durch den Press-Bandförderer 30 positioniert und angehalten, um durch die Pressstation 33, bzw. die Pressplatte 19 mit der Pressplattenbewegungsvorrichtung 28 zu einem Waffelzwischenprodukt 1 gestapelt zu werden.

## Patentansprüche

1. **Verfahren** zum Bilden eines mehrlagigen Waffelzwischenprodukts (1) mit einer Anlage gemäß den Ansprüchen 11-15, umfassend folgende Schritte:
- Zuführen eines mit einer essbaren Füllungsschicht versehenen ersten Waffelgrundblattes (2') auf einer ersten Förderfläche (3) in einen Sandwichformer (4) sowie Positionieren und Anhalten des ersten Waffelgrundblattes (2') in einem Sandwichformerbereich (5),
- Zuführen eines Waffeldeckblattes (6) auf einer zweiten Förderfläche (7) in den Sandwichformer (4) sowie Positionieren und Anhalten des Waffeldeckblattes (6) oberhalb des Sandwichformerbereichs (5),
- anschließend in Kontakt bringen der, in Abtransportrichtung (8) gesehen, vorderen Kante (9) des Waffeldeckblattes (6) mit der vorderen Kante (11) des ersten Waffelgrundblattes (2'), insbesondere durch Absenken der vorderen Kante (9) des Waffeldeckblattes (6) auf die vordere Kante (11) des ersten Waffelgrundblattes (2'),
- anschließend Abtransport des ersten Waffelgrundblattes (2') in Abtransportrichtung (8), wobei das Richtung erstes Waffelgrundblatt (2') geneigte Waffeldeckblatt (6) während des Abtransports des ersten Waffelgrundblattes (2') in einem Auflegevorgang deckungsgleich flächig auf das erste Waffelgrundblatt (2') bzw. auf dessen Füllungsschicht gelegt wird.

2. Verfahren nach Anspruch 1, **dadurch gekennzeichnet, dass** das Waffeldeckblatt (6) während des Auflegevorgangs Richtung erstes Waffelgrundblatt (2') gedrückt wird, wobei das Waffeldeckblatt (6) während des Auflegevorgangs insbesondere durch einen gezielten Gasstrahl (12) Richtung erstes Waffelgrundblatt (2') gedrückt wird.

3. Verfahren nach einem der Ansprüche 1 oder 2, **dadurch gekennzeichnet, dass** das Waffeldeckblatt (6) beim Positionieren und Anhalten entlang der zweiten Förderfläche (7) bewegt wird, bis es an einem Stopper (13) ansteht und im Bereich seiner vorderen Kante (9) auf einem vorderen Auflager (14) und im Bereich seiner hinteren Kante (10) auf einem hinteren Auflager (15) aufgelagert ist.

4. Verfahren nach einem der Ansprüche 1 bis 3, **dadurch gekennzeichnet, dass** das Waffeldeckblatt (6) durch den Abtransport des ersten Waffelgrundblattes (2') von dem hinteren Auflager (15) heruntergezogen und in dem Auflegevorgang deckungsgleich flächig auf das Waffelgrundblatt (2) bzw. auf dessen Füllungsschicht gelegt wird.

5. Verfahren nach einem der Ansprüche 1 bis 4, **dadurch gekennzeichnet, dass** das erste Waffelgrundblatt (2') an der Sandwichformposition durch einen Sandwich-Bandförderer (16) mit einem Positionierantrieb stopperlos positioniert und angehalten wird.

6. Verfahren nach einem der Ansprüche 1 bis 5, **dadurch gekennzeichnet,**
- **dass** mehrere Waffelgrundblätter (2) auf der ersten Förderfläche (3) vor dem Sandwichformer (4) in einer Füllungsauftragsvorrichtung (17) mit einer Füllungsschicht versehen werden,
- insbesondere dass die Waffelgrundblätter (2) Stoß an Stoß durch die Füllungsauftragsvorrichtung (17) befördert werden und dadurch als im Wesentlichen durchgehende Fläche mit einer Füllungsschicht versehen werden.

7. Verfahren nach einem der Ansprüche 1 bis 6, **dadurch gekennzeichnet, dass** ein im Sandwichformer (4) gebildetes Waffelsandwich (20) und mindestens ein mit einer Füllungsschicht versehenes zweites Waffelgrundblatt (2") auf der ersten Förderfläche (3) zu einer dem Sandwichformer (4) nachgeordneten Pressstation (33) befördert werden, in der das Waffelsandwich (20):
- in einem Pressbereich (18) durch einen Press-Bandförderer (30) mit einem Positionierantrieb stopperlos positioniert und angehalten wird,
- anschließend von oder an einer Pressplatte (19) angehoben wird, bis das mit der Füllungsschicht versehene zweite Waffelgrundblatt (2") unterhalb des angehobenen Waffelsandwichs (20) im Pressbereich (18) positioniert und angehalten ist,
- und anschließend durch die Pressplatte (19) in einem Pressvorgang deckungsgleich flächig auf das zweite Waffelgrundblatt (2") bzw. dessen Füllungsschicht aufgepresst wird.

8. Verfahren nach Anspruch 7, **dadurch gekennzeichnet, dass** das Waffelsandwich (20) und das durch den Pressvorgang an dem Waffelsandwich (20) anhaftende mit der Füllungsschicht versehene zweite Waffelgrundblatt (2") zusammen einen Waffelzwischenproduktbestandteil (21) bilden, und dass der Waffelzwischenproduktbestandteil (21):
- von oder an der Pressplatte (19) angehoben wird, bis ein mit einer Füllungsschicht versehenes drittes Waffelgrundblatt (2‴) unterhalb des angehobenen Waffelzwischenproduktbestandteils (21) im Pressbereich (18) positioniert und angehalten ist,
- und anschließend durch die Pressplatte (19) in einem Pressvorgang deckungsgleich flächig auf das dritte Waffelgrundblatt (2‴) bzw. dessen Füllungsschicht aufgepresst wird,
**und gegebenenfalls:**
- dass das Waffelsandwich (20) und die durch den Pressvorgang an dem Waffelsandwich (20) anhaftenden Waffelgrundblätter (2) zusammen einen Waffelzwischenproduktbestandteil (21) bilden, und dass der Waffelzwischenproduktbestandteil (21):
- von oder an der Pressplatte (19) angehoben wird, bis ein mit einer Füllungsschicht versehenes viertes Waffelgrundblatt (2) unterhalb des angehobenen Waffelzwischenproduktbestandteils (21) im Pressbereich (18) positioniert und angehalten ist,
- und anschließend durch die Pressplatte (19) in einem Pressvorgang deckungsgleich flächig auf das vierte Waffelgrundblatt (2) bzw. dessen Füllungsschicht aufgepresst wird.

9. Verfahren nach Anspruch 8, **dadurch gekennzeichnet, dass** die Waffelgrundblätter (2) auf der ersten Förderfläche (3) von mehreren entlang der ersten Förderfläche (3) angeordneten Fördervorrichtungen (22) befördert werden, wobei die Fördergeschwindigkeiten der einzelnen Fördervorrichtungen (22) derart eingestellt werden oder sind, dass im Bereich unmittelbar vor dem Sandwichformer (4):
- der erste Abstand (23), also der Abstand zwischen dem erstem Waffelgrundblatt (2') und dem zweitem Waffelgrundblatt (2"), größer ist als
- der zweite Abstand (24), also der Abstand zwischen zweiten Waffelgrundblatt (2") und dem dritten Waffelgrundblatt (2‴).

10. Verfahren nach Anspruch 9, wobei die Fördergeschwindigkeiten der einzelnen Fördervorrichtungen (22) derart eingestellt werden oder sind, dass im Bereich unmittelbar vor der Pressstation (33):
- der dritte Abstand (25), also der Abstand zwischen dem Waffelsandwich (20) und dem zweiten Waffelgrundblatt (2") im Wesentlichen gleich groß ist wie
- der vierte Abstand (26), also der Abstand zwischen dem zweiten Waffelgrundblatt (2") und dem dritten Waffelgrundblatt (2‴).

11. **Anlage** zur Bildung eines mehrlagigen Waffelzwischenprodukts (1), mit einem Sandwichformer (4) zur Bildung eines Waffelsandwichs (20) durch deckungsgleiches Abdecken eines, mit einer essbaren Füllungsschicht versehenen, ersten Waffelgrundblattes (2') mit einem Waffeldeckblatt (6), wobei der Sandwichformer (4) folgende Komponenten umfasst:
- einen Abschnitt einer ersten Förderfläche(3) zum Zuführen, Positionieren und Anhalten eines mit einer essbaren Füllungsschicht versehenen ersten Waffelgrundblattes (2') in einem Sandwichformerbereich (5),
- einen Abschnitt einer zweiten Förderfläche (7) zum Zuführen eines Waffeldeckblattes (6) oberhalb des Sandwichformerbereichs (5),
- einen Stopper(13), ein vorderes Auflager (14) und ein hinteres Auflager (15) zum Anhalten und Positionieren des Waffeldeckblattes (6) oberhalb des Sandwichformerbereichs (5), wobei
- das hintere Auflager (15) zur Auflagerung des Waffeldeckblattes (6) im Bereich seiner hinteren Kante (10) eingerichtet ist,
- das vordere Auflager (14) zur Auflagerung des Waffeldeckblattes (6) im Bereich seiner vorderen Kante (9) eingerichtet ist,
- und eine Auflagerbewegungsvorrichtung (27) vorgesehen ist, die zur Bewegung des vorderen Auflagers (14), zum Neigen des Waffeldeckblattes (6) in Richtung des ersten Waffelgrundblattes (2') und zum in Kontakt bringen der vorderen Kante (9) des Waffeldeckblattes (6) mit der vordern Kante (11) des ersten Waffelgrundblattes (2') eingerichtet ist
- und im Bereich des Sandwichformers (4) die erste Förderfläche (3) beispielsweise durch einen Sandwich-Bandförderer (16) gebildet ist, wobei der Sandwich-Bandförderer (16) zum Abtransport des ersten Waffelgrundblattes (2') entlang der Abtransportrichtung (8) betätigbar ist und wobei dadurch, dass das Waffeldeckblatt (6) zumindest mit einer Kante am Waffelgrundblatt (2') aufliegt, das Waffeldeckblatt (6) vom Waffelgrundblatt (2') mitgezogen wird und sich in weiterer Folge flächig und deckungsgleich auf das Waffelgrundblatt (2') bzw. auf dessen Füllungsschicht legt.

12. Anlage nach Anspruch 11, mit einer Pressstation (33) zur Bildung eines Waffelzwischenproduktbestandteils (21) durch deckungsgleiches, flächiges Aufpressen des Waffelsandwichs (20) auf ein, mit einer essbaren Füllungsschicht versehenes, zweites Waffelgrundblatt (2"), **dadurch gekennzeichnet,**
- **dass** eine Pressplatte (19) und eine Pressplattenbewegungsvorrichtung (28) vorgesehen sind,
- **dass** die Pressplattenbewegungsvorrichtung (28) dazu eingerichtet ist, ein im Pressbereich (18) positioniertes und angehaltenes Waffelsandwich (20) anzuheben und in einem Pressvorgang deckungsgleich flächig auf ein unterhalb des angehobenen Waffelsandwichs (20) im Pressbereich (18) positioniertes und angehaltenes, mit einer Füllungsschicht versehenes, zweites Waffelgrundblatt (2") aufzupressen.

13. Anlage nach Anspruch 11 oder 12, **dadurch gekennzeichnet,**
- **dass** entlang der ersten Förderfläche (3) mehrere **Fördervorrichtungen** (22) zur Förderung der Waffelgrundblätter (2) zum Sandwichformer (4) und zur Pressstation (33) vorgesehen sind,
- **dass** die Fördervorrichtungen (22) jeweils einen Band- oder Riemenförderer umfassen,
- **dass** die Fördervorrichtungen (22) jeweils mit variabler oder wählbarer Geschwindigkeit durch einen Asynchronmotor mit Frequenzumrichter angetrieben sind,
- **dass** die Fördervorrichtungen (22) jeweils einen Detektor (32) zur Detektion eines auf der Fördervorrichtung (22) beförderten Waffelgrundblattes (2) oder Waffelsandwichs (20) aufweisen,
- und gegebenenfalls, dass die Steuerung der Fördervorrichtungen (22) über eine zentrale Steuerungseinrichtung (29) der Anlage erfolgt.

14. Anlage nach einem der Ansprüche 11 bis 13, **dadurch gekennzeichnet, dass** der Sandwichformer (4) einen Sandwich-Bandförderer (16) mit einem Positionierantrieb zur stopperlosen Positionierung des ersten Waffelgrundblattes (2') aufweist.

15. Anlage nach einem der Ansprüche 11 bis 14, **dadurch gekennzeichnet,**
- **dass** die Pressstation (33) einen Press- Bandförderer (30) mit einem Positionierantrieb zur stopperlosen Positionierung des Wafffelsandwichs (20) und/oder eines Waffelgrundblattes (2) aufweist,
- und insbesondere dass unterhalb des oberen Trums des Press-Bandförderers (30) eine Gegenhalterplatte (31) zur Bildung eines Widerlagers bei dem Pressvorgang vorgesehen ist.

## Claims

1. A method for forming a multi-layer intermediate wafer product (1) by means of a system according to claims 11-15, comprising the following steps:
- supplying a first base wafer sheet (2') provided with an edible filling layer on a first conveying surface (3) into a sandwich former (4) and positioning and stopping the first base wafer sheet (2') in a sandwich forming area (5),
- supplying a cover wafer sheet (6) on a second conveying surface (7) into the sandwich former (4) and positioning and stopping the cover wafer sheet (6) above the sandwich forming area (5),
- subsequently bringing, as seen in the transport direction (8), the front edge (9) of the cover wafer sheet (6) into contact with the front edge (11) of the first base wafer sheet (2'), in particular by lowering the front edge (9) of the cover wafer sheet (6) onto the front edge (11) of the first base wafer sheet (2'),
- subsequently transporting the first base wafer sheet (2') in the transport direction (8), wherein the cover wafer sheet (6), tilted towards the first base wafer sheet (2'), is placed in a congruent, planar manner onto the first base wafer sheet (2') or onto its filling layer, in a placing process during the transport of the first base wafer sheet (2').

2. The method according to claim 1, **characterised in that** the cover wafer sheet (6) is urged towards the first base wafer sheet (2') during the placing process, wherein the cover wafer sheet (6) is, in particular by a targeted gas jet (12), urged towards the first base wafer sheet (2') during the placing process.

3. The method according to one of claims 1 or 2, **characterised in that** the cover wafer sheet (6), upon positioning and stopping along the second conveying surface (7), is moved until it abuts against a stopper (13) and is supported in the area of its front edge (9) on a front support (14) and in the area of its rear edge (10) on a rear support (15).

4. The method according to one of claims 1 to 3, **characterised in that** the cover wafer sheet (6) is pulled off from the rear support (15) by the transport of the first base wafer sheet (2') and, in the placing process, is placed in a congruent, planar manner onto the base wafer sheet (2) or onto its filling layer.

5. The method according to one of claims 1 to 4, **characterised in that** the first base wafer sheet (2') is positioned and stopped at the sandwich forming position by a sandwich belt conveyor (16) with a positioning drive without the use of a stopper.

6. The method according to one of claims 1 to 5, **characterised**
- **in that** multiple base wafer sheets (2) are provided with a filling layer in a filling application device (17) on the first conveying surface (3) upstream of the sandwich former (4),
- in particular in that the base wafer sheets (2) are conveyed end-to-end through the filling application device (17) and hence a substantially continuous area is provided with a filling layer.

7. The method according to one of claims 1 to 6, **characterised in that** a wafer sandwich (20) formed in the sandwich former (4) and at least one second base wafer sheet (2") provided with a filling layer are conveyed on the first conveying surface (3) to a pressing station (33) downstream of the sandwich former (4), in which the wafer sandwich (20) is:
- in a pressing area (18), positioned and stopped by a press belt conveyor (30) with a positioning drive without the use of a stopper,
- subsequently lifted by or on a pressing plate (19) until the second base wafer sheet (2") provided with a filling layer is positioned and stopped below the lifted wafer sandwich (20) in the pressing area (18),
- and, in a pressing process, is subsequently pressed in a congruent, planar manner onto the second base wafer sheet (2") and onto its filling layer by the pressing plate (19).

8. The method according to claim 7, **characterised in that** the wafer sandwich (20) and the second base wafer sheet (2") provided with the filling layer, adhering to the wafer sandwich (20) as a result of the pressing process, together form an intermediate wafer product component (21), and **in that** the intermediate wafer product component (21):
- is lifted by or on the pressing plate (19) until a third base wafer sheet (2‴) provided with a filling layer is positioned and stopped below the lifted intermediate wafer product component (21) in the pressing area (18),
- and is, in a pressing process, subsequently pressed by the pressing plate (19) in a congruent, planar manner onto the third base wafer sheet (2‴) or onto its filling layer,
**and optionally,**
- **in that** the wafer sandwich (20) and the base wafer sheets (2) adhering to the wafer sandwich (20) as a result of the pressing process together form an intermediate wafer product component (21), and **in that** the intermediate wafer product component (21):
- in the pressing area (18), is lifted by or on the pressing plate (19) until a fourth base wafer sheet (2) provided with a filling layer is positioned and stopped below the lifted intermediate wafer product component (21),
- and is, in a pressing process, subsequently pressed by the pressing plate (19) in a congruent, planar manner onto the fourth base wafer sheet (2) or onto its filling layer.

9. The method according to claim 8, **characterised in that** the base wafer sheets (2) are conveyed on the first conveying surface (3) by multiple conveying devices (22) arranged along the first conveying surface (3), wherein the conveying speeds of the individual conveying devices (22) are set such that, in the area immediately upstream of the sandwich former (4):
- the first distance (23), *i.e*. the distance between the first base wafer sheet (2') and second base wafer sheet (2"), is greater than
- the second distance (24), *i.e*. the distance between the second base wafer sheet (2") and third base wafer sheet (2‴).

10. The method according to claim 9, wherein the conveying speeds of the individual conveying devices (22) are set such that in the area immediately upstream of the pressing station (33):
- the third distance (25), *i.e*. the distance between the wafer sandwich (20) and the second base wafer sheet (2") is substantially equal to the
- the fourth distance (26), *i.e*. the distance between the second base wafer sheet (2") and the third base wafer sheet (2‴).

11. **A system** for forming a multi-layer intermediate wafer product (1) by means of a sandwich former (4) for forming a wafer sandwich (20) by covering a first base wafer sheet (2`) provided with an edible filling layer with a cover wafer sheet (6) in a congruent manner, wherein the sandwich former (4) comprises the following elements:
- a section of a first conveying surface (3) in a sandwich forming area (5) for supplying, positioning and stopping a first base wafer sheet (2') provided with an edible filling layer,
- a section of a second conveying surface (7) for supplying a cover wafer sheet (6) above the sandwich forming area (5),
- a stopper (13), a front support (14) and a rear support (15) for stopping and positioning the cover wafer sheet (6) above the sandwich forming area (5),
**wherein,**
- the rear support (15) is configured to support the cover wafer sheet (6) in the area of its rear edge (10),
- the front support (14) is configured to support the cover wafer sheet (6) in the area of its front edge (9),
- and a support movement device (27) is provided that is configured to move the front support (14), to tilt the cover wafer sheet (6) towards the first base wafer sheet (2') and to bring the front edge (9) of the cover wafer sheet (6) into contact with the front edge (11) of the first base wafer sheet (2')
- and in the area of the sandwich former (4) the first conveying surface (3) is formed, for example, by a sandwich belt conveyor (16), wherein the sandwich belt conveyor (16) is operable to transport the first base wafer sheet (2') along the transport direction (8) and, because the cover wafer sheet (6) rests with at least one edge on the base wafer sheet (2'), the cover wafer sheet (6) is pulled along by the base wafer sheet (2') and subsequently comes to lie in a congruent, planar manner on the base wafer sheet (2') or its filling layer.

12. The system according to claim 11, with a pressing station (33) for forming an intermediate wafer product component (21) by pressing the wafer sandwich (20) in a congruent, planar manner onto a second base wafer sheet (2") provided with an edible filling layer, **characterised**
- **in that** a pressing plate (19) and a pressing plate movement device (28) are provided,
- **in that** a pressing plate movement device (28) is configured to lift a wafer sandwich (20) positioned and stopped in the pressing area (18) and in a pressing process, to press it in a congruent, planar manner onto a second base wafer sheet (2") provided with a filling layer, positioned and stopped below the lifted wafer sandwich (20) in the pressing area (18).

13. The system according to one of claim 11 or 12, **characterised**
- **in that** multiple conveying devices (22) for conveying the base wafer sheets (2) to the sandwich former (4) and to the pressing station (33) are provided along the first conveying surface (3),
- **in that** the conveying devices (22) each comprise a belt conveyor or strap conveyor.
- **in that** the conveying devices (22) are each driven at a variable or selectable speed by an asynchronous motor with a frequency converter,
- **in that** the conveying devices (22) each have a detector (32) for detecting a base wafer sheet (2) or wafer sandwich (20) conveyed on the conveying device (22),
- and optionally in that controlling the conveying devices (22) is executed by a central controller (29) of the system.

14. The system according to one of claims 11 to 13, **characterised in that** the sandwich former (4) has a sandwich belt conveyor (16) with a positioning drive for positioning the first base wafer sheets (2') without the use of a stopper.

15. The system according to one of claims 11 to 14, **characterised in that**
- the pressing station (33) has a press belt conveyor (30) with a positioning drive for positioning the wafer sandwich (20) and/or the base wafer sheet (2) without the use of a stopper,
- and in particular **in that** a counter-holder plate (31) is provided below the upper strand of the press belt conveyor (30) to form an abutment during the pressing process.

## Revendications

1. **Procédé** de formation d'un produit intermédiaire de gaufrette à plusieurs couches (1) avec une installation selon les revendications 11-15, comprenant les étapes suivantes :
- Acheminement d'une première feuille de base de gaufrette (2') pourvue d'une couche de fourrage comestible sur une première surface de transport (3) dans un formeur de sandwich (4) ainsi que positionnement et arrêt de la première feuille de base de gaufrette (2') dans une zone de formation de sandwich (5),
- Acheminement d'une feuille de couverture de gaufrette (6) sur une deuxième surface de transport (7) dans le formeur de sandwich (4) ainsi que le positionnement et l'arrêt de la feuille de couverture de gaufrette (6) au-dessus de la zone de formation de sandwich (5),
- ensuite mise en contact du bord avant (9), vu dans le sens d'évacuation (8), de la feuille de couverture de gaufrette (6) avec le bord avant (11) de la première feuille de base de gaufrette (2'), notamment en abaissant le bord avant (9) de la feuille de couverture de gaufrette (6) sur le bord avant (11) de la première feuille de base de gaufrette (2'),
- puis en évacuant la première feuille de base de gaufrette (2') dans le sens d'évacuation (8), la feuille de couverture de gaufrette (6) inclinée en direction de la première feuille de base de gaufrette (2') étant posée à plat sur la première feuille de base de gaufrette (2') ou sur la couche de fourrage pendant l'évacuation de la première feuille de base de gaufrette (2') sur sa couche de fourrage.

2. Procédé selon la revendication 1, **caractérisé en ce que** la feuille de couverture de gaufrette (6) est pressée en direction de la première feuille de base de gaufrette (2') pendant l'opération de pose, la feuille de couverture de gaufrette (6) étant pressée en direction de la première feuille de base de gaufrette (2`) pendant l'opération de pose, en particulier par un jet de gaz (12) ciblé.

3. Procédé selon l'une des revendications 1 ou 2, **caractérisé en ce que** la feuille de couverture de gaufrette (6) est déplacée le long de la deuxième surface de transport (7) lors du positionnement et de l'arrêt jusqu'à ce qu'elle vienne buter contre une butée (13) et qu'elle repose sur un appui avant (14) au niveau de son bord avant (9) et sur un appui arrière (15) au niveau de son bord arrière (10).

4. Procédé selon l'une des revendications 1 à 3, **caractérisé en ce que** la feuille de couverture de gaufrette (6) est tirée vers le bas à partir de l'appui arrière (15) par l'évacuation de la première feuille de base de gaufrette (2') et est posée à plat sur la feuille de base de gaufrette (2) ou sur sa couche de fourrage de manière à la recouvrir de façon plane lors du processus de pose.

5. Procédé selon l'une des revendications 1 à 4, **caractérisé en ce que** la première feuille de base de gaufrette (2') est positionnée et arrêtée sans butée à la position de formation de sandwich par un convoyeur à bande de sandwich (16) avec un entraînement de positionnement.

6. Procédé selon l'une des revendications 1 à 5, **caractérisé**
- **en ce que** plusieurs feuilles de base de gaufrette (2) sont pourvues d'une couche de fourrage sur la première surface de transport (3) avant le formeur de sandwich (4) dans un dispositif d'application de fourrage (17),
- en particulier en ce que les feuilles de base de gaufrette (2) sont transportées bout à bout à travers le dispositif d'application de fourrage (17) et sont ainsi pourvues d'une couche de fourrage sous la forme d'une surface essentiellement continue.

7. Procédé selon l'une des revendications 1 à 6, **caractérisé en ce qu'**un sandwich de gaufrette (20) formé dans le formeur de sandwich (4) et au moins une deuxième feuille de base de gaufrette (2") pourvue d'une couche de fourrage sont transportés sur la première surface de transport (3) vers une station de pressage (33) disposée en aval du formeur de sandwich (4), dans laquelle le sandwich de gaufrette (20) :
- est positionné et arrêté sans butée dans une zone de pressage (18) par un convoyeur à bande de pressage (30) avec un entraînement de positionnement,
- est ensuite soulevé par ou sur une plaque de pressage (19) jusqu'à ce que la deuxième feuille de base de gaufrette (2") pourvue de la couche de fourrage soit positionnée et arrêtée dans la zone de pressage (18) en dessous du sandwich de gaufrette (20) soulevé,
- et est ensuite pressé par la plaque de pressage (19) dans une opération de pressage de manière à recouvrir de manière identique la deuxième feuille de base de gaufrette (2") ou sa couche de fourrage.

8. Procédé selon la revendication 7, **caractérisé en ce que** le sandwich de gaufrette (20) et la deuxième feuille de base de gaufrette (2") munie de la couche de fourrage et adhérant au sandwich de gaufrette (20) par le opération de pressage forment ensemble un composant de produit intermédiaire de gaufrette (21), et **en ce que** le composant de produit intermédiaire de gaufrette (21) :
- est soulevé par ou contre la plaque de pressage (19) jusqu'à ce qu'une troisième feuille de base de gaufrette (2‴) pourvue d'une couche de fourrage soit positionnée et arrêtée dans la zone de pressage (18) en dessous du composant de produit intermédiaire de gaufrette (21) soulevé,
- et est ensuite pressé par la plaque de pressage (19) en une opération de pressage de manière à recouvrir de manière identique la troisième feuille de base de gaufrette (2‴) ou sa couche de fourrage,
**et, le cas échéant** :
- **en ce que** le sandwich de gaufrette (20) et les feuilles de base de gaufrette (2) adhérant au sandwich de gaufrette (20) par le opération de pressage forment ensemble un composant de produit intermédiaire de gaufrette (21), et **en ce que** le composant de produit intermédiaire de gaufrette (21) :
- est soulevé par ou sur la plaque de pressage (19) jusqu'à ce qu'une quatrième feuille de base de gaufrette (2) pourvue d'une couche de fourrage soit positionnée et arrêtée dans la zone de pressage (18) en dessous du composant de produit intermédiaire de gaufrette (21) soulevé,
- et est ensuite pressé par la plaque de pressage (19) en une seule opération de pressage de manière à recouvrir en surface la quatrième feuille de base de gaufrette (2) ou sa couche de fourrage.

9. Procédé selon la revendication 8, **caractérisé en ce que** les feuilles de base de gaufrette (2) sont transportées sur la première surface de transport (3) par plusieurs dispositifs de transport (22) disposés le long de la première surface de transport (3), les vitesses de transport des différents dispositifs de transport (22) étant ou sont réglées réglées de telle sorte que, dans la zone située immédiatement avant le formeur de sandwich (4) :
- la première distance (23), c'est-à-dire la distance entre la première feuille de base de gaufrette (2') et la deuxième feuille de base de gaufrette (2"), est supérieure à
- la deuxième distance (24), c'est-à-dire la distance entre la deuxième feuille de base de gaufrette (2") et la troisième feuille de base de gaufrette (2"').

10. Procédé selon la revendication 9, dans lequel les vitesses de transport des différents dispositifs de transport (22) étant ou sont réglées de telle sorte que, dans la zone située immédiatement avant la station de pressage (33) :
- la troisième distance (25), c'est-à-dire la distance entre le sandwich de gaufrette (20) et la deuxième feuille de base de gaufrette (2"), soit sensiblement égale à
- la quatrième distance (26), c'est-à-dire la distance entre la deuxième feuille de base de gaufrette (2") et la troisième feuille de base de gaufrette (2‴).

11. **Installation** pour la formation d'un produit intermédiaire de gaufrette (1) à plusieurs couches, avec un formeur de sandwich (4) pour former un sandwich de gaufrette (20) en recouvrant de manière identique une première feuille de base de gaufrette (2') pourvue d'une couche de fourrage comestible avec une feuille de couverture de gaufrette (6), le formeur de sandwich (4) comprenant les composants suivants :
- une section d'une première surface de transport (3) pour amener, positionner et arrêter une première feuille de base de gaufrette (2') pourvue d'une couche de fourrage comestible dans une zone de formation de sandwich (5),
- une section d'une deuxième surface de transport (7) pour amener une feuille de couverture de gaufrette (6) au-dessus de la zone de formation de sandwich (5),
- une butée (13), un appui avant (14) et un appui arrière (15) pour arrêter et positionner la feuille de couverture de gaufrette (6) au-dessus de la zone de formation de sandwich (5),
- l'appui arrière (15) étant conçu pour supporter la feuille de couverture de gaufrette (6) dans la zone de son bord arrière (10),
- l'appui avant (14) étant conçu pour supporter la feuille de couverture de gaufrette (6) dans la zone de son bord avant (9),
- et un dispositif de déplacement d'appui (27) étant prévu, qui sert à déplacer l'appui avant (14), pour incliner la feuille de couverture de gaufrette (6) en direction de la première feuille de base de gaufrette (2') et pour amener le bord avant (9) de la feuille de couverture de gaufrette (6) en contact avec le bord avant (11) de la première feuille de base de gaufrette (2`) et,
- dans la zone du formeur de sandwich (4), la première surface de transport (3) est formée par exemple par un convoyeur à bande de sandwich (16), le convoyeur à bande de sandwich (16) pouvant être actionné pour l'évacuation de la première feuille de base de gaufrette (2') le long du sens d'évacuation (8) et, du fait que la feuille de couverture de gaufrette (6) repose au moins par un bord sur la feuille de base de gaufrette (2'), la feuille de couverture de gaufrette (6) est entraînée par la feuille de base de gaufrette (2') et se pose par la suite à plat et de manière à la recouvrir sur la feuille de base de gaufrette (2') ou sur sa couche de fourrage.

12. Installation selon la revendication 11, avec une station de pressage (33) pour la formation d'un composant de produit intermédiaire de gaufrette (21) par pressage à plat et en coïncidence du sandwich de gaufrette (20) sur une deuxième feuille de base de gaufrette (2") pourvue d'une couche de fourrage comestible, **caractérisée**
- **en ce qu'**une plaque de pressage (19) et un dispositif de déplacement de plaque de pressage (28) sont prévus,
- **en ce que** le dispositif de déplacement de plaque de pressage (28) est conçu pour soulever un sandwich de gaufrette (20) positionné et arrêté dans la zone de pressage (18) et pour le presser en une opération de pressage de manière à ce qu'il coïncide en surface avec une deuxième feuille de base de gaufrette (2") positionnée et arrêtée dans la zone de pressage (18) au-dessous du sandwich de gaufrette (20) soulevé et pourvu d'une couche de fourrage.

13. Installation selon la revendication 11 ou 12, **caractérisée**
- **en ce que** plusieurs dispositifs de transport (22) sont prévus le long de la première surface de transport (3) pour le transport des feuilles de base de gaufrette (2) vers le formeur de sandwich (4) et vers la station de pressage (33),
- **en ce que** les dispositifs de transport (22) comprennent chacun un convoyeur à bande ou à courroie,
- **en ce que** les dispositifs de transport (22) sont entraînés chacun à une vitesse variable ou sélectionnable par un moteur asynchrone avec convertisseur de fréquence,
- **en ce que** les dispositifs de transport (22) présentent chacun un détecteur (32) pour la détection d'une feuille de base de gaufrette (2) ou d'un sandwich de gaufrette (20) transporté sur le dispositif de transport (22),
- et éventuellement en ce que la commande des dispositifs de transport (22) s'effectue par un dispositif de commande central (29) de l'installation.

14. Installation selon l'une des revendications 11 à 13, **caractérisée en ce que** le formeur de sandwich (4) comporte un convoyeur à bande de sandwich (16) avec un entraînement de positionnement pour le positionnement sans buteé de la première feuille de base de gaufrette (2').

15. Installation selon l'une des revendications 11 à 14, **caractérisée**
- **en ce que** la station de pressage (33) présente un convoyeur à bande de pressage (30) avec un entraînement de positionnement pour le positionnement sans buteé du sandwich de gaufrette (20) et/ou d'une feuille de base de gaufrette (2),
- et en particulier en ce qu'une plaque de contre-support (31) est prévue en dessous du brin supérieur du convoyeur à bande de pressage (30) pour former une butée lors de l'opération de pressage.
